# EUROPÄISCHE PATENTANMELDUNG

(11) **EP 4 202 605 A1**
(43) Veröffentlichungstag der Anmeldung: **28.06.2023**
(21) Anmeldenummer: 21216906.4
(22) Anmeldetag: 22.12.2021
(51) Int. Cl.: G06F 3/00, G07C 1/10, G06F 21/31, G06F 3/01, G06F 3/16, G06Q 10/06

(54) **ANWESENHEITSERFASSUNGS-TERMINAL**

(71) Anmelder: dormakaba EAD GmbH, 78056 Villingen-Schwenningen (DE)
(72) Erfinder: Meiss, Elmar, 78056 Villingen-Schwenningen (DE); Finkbeiner, Florian, 78056 Villingen-Schwenningen (DE)
(74) Vertreter: Balder IP Law, S.L.

(57) **Zusammenfassung**

Die Erfindung betrifft ein Anwesenheitserfassungs-Terminal (10), insbesondere Zeiterfassungs-Terminal, zur Erfassung einer Anwesenheitsinformation einer Person (40) auf Basis einer Aktion der Person (40), umfassend: eine Steuereinheit (11), eine Speicherverwaltungseinheit (20), wobei die Speicherverwaltungseinheit (20) zum Verarbeiten und Speichern der Anwesenheitsinformation der Person (40) eingerichtet ist, wenigstens eine Sensoreinheit (12), wobei die Sensoreinheit zur Beobachtung einer Umgebungszone (30) und zur Ausgabe einer aus der Beobachtung der Umgebungszone (30) detektierten Präsenzinformation der Person (40) eingerichtet ist, eine identification engine (111), wobei die identification engine (111) zur Identifizierung der Person (40) und zur Ausgabe einer Identifizierungsinformation eingerichtet ist, wobei die Identifizierung der Person (40) auf Basis der detektierten Präsenzinformation der Person (40) und/oder auf Basis zumindest einer weiteren personenbezogenen Information erfolgen kann, und eine intent engine (112), wobei die intent engine (112) zur Erfassung einer Absicht einer Interaktion der Person (40) mit dem Anwesenheitserfassungs-Terminal (10) und zur Ausgabe einer Absichtsinformation eingerichtet ist. Ferner betrifft die Erfindung ein entsprechendes computerimplementiertes Verfahren zum Betreiben eines Anwesenheitserfassungs-Terminals (10).

## Beschreibung

Die vorliegende Erfindung betrifft ein Anwesenheitserfassungs-Terminal zur Erfassung einer Anwesenheitsinformation einer Person auf Basis einer Aktion der Person. Insbesondere betrifft die Erfindung ein Zeiterfassungs-Terminal. Weiterhin betrifft die vorliegende Erfindung ein computerimplementiertes Verfahren zum Betreiben eines entsprechenden Anwesenheitserfassungs-Terminals, insbesondere Zeiterfassungs-Terminals, zur Erfassung einer Anwesenheitsinformation einer Person auf Basis einer Aktion der Person, sowie ein entsprechendes Computerprogramm.

Anwesenheitserfassungs-Terminals sind insbesondere in der Arbeitswelt zur Erfassung der Anwesenheit eines/einer Mitarbeiters/-in weit verbreitet. Anwesenheitserfassungs-Terminals befinden sich häufig in Bürogebäuden, Fabrikhallen oder etwa auch Krankenhäusern. Mithilfe der Anwesenheitserfassungs-Terminals wird ein System bereitgestellt, was eine elektronische Erfassung und Speicherung von Mitarbeiteranwesenheiten erlaubt. Im Falle eines Zeiterfassungs-Terminals dient das Terminal auch zur Erfassung und Speicherung der absolvierten Arbeitszeiten. Allgemein wird in diesem Zusammenhang vorliegend von der Anwesenheitsinformation einer Person gesprochen, welche Person sich etwa über das Anwesenheitserfassungs-Terminal zur Arbeit einbuchen oder beispielsweise für eine Pause oder am Ende des Arbeitstags ausloggen bzw. aus dem System ausbuchen möchte.

Anwesenheitserfassungs-Terminals erlauben es zentral, etwa an einer Stelle im Eingangsbereich eines Bürogebäudes oder aber auch auf jeder Etage bzw. in jeder Abteilung eines Gebäudes/Unternehmens, einen Punkt zur Interaktion für die Personen bereitzustellen, über welchen einfach die Buchungsvorgänge realisiert werden können. Dem Arbeitgeber steht dann ein zentrales System zur Verfügung, etwa über die Speicherverwaltungseinheit des Anwesenheitserfassungs-Terminals, über welches/welche der Arbeitgeber ohne großen Aufwand die Anwesenheitsinformationen der Personen nachhalten kann.

Auch wenn über die bekannten Anwesenheitserfassungs-Terminals eine Erfassung von Anwesenheitsinformationen der Personen bereits automatisiert und im Vergleich dazu, dass jede Person ihre Anwesenheit händisch nachhält oder individuell dem Arbeitgeber übermittelt, erheblich vereinfacht ist, ist die Interaktion weiterhin verbesserungswürdig. So ist die Bedienung der Anwesenheitserfassungs-Terminals nutzerfreundlicher auszugestalten. Denn regelmäßig erfordern Anwesenheitserfassungs-Terminals, dass die interagierenden Personen bis an das häufig an einer Stelle einer Wand platzierten Anwesenheitserfassungs-Terminal herantreten und vor Ort, etwa über ein Display oder eine andere Schnittstelle in direkter Nähe zum Anwesenheitserfassungs-Terminal, Eingaben vornehmen. So ist es häufig erforderlich, dass die Person ein individuelles mobiles Zutrittsmedium, etwa eine persönliche Schlüsselkarte, ein Badge oder dergleichen, unmittelbar an das Anwesenheitserfassungs-Terminal heranhält, um eine Einbuchung oder Ausbuchung vorzunehmen. Dabei besteht häufig auch die Gefahr von Fehlbuchungen, sei es unabsichtlicher Art oder aber auch absichtlicher Art, um etwa einen Einbuchungsvorgang für einen Dritten vorzunehmen oder einzubuchen, ohne jedoch zum Arbeitsplatz zu gehen.

Vor diesem Hintergrund ist eine der vorliegenden Erfindung zugrundeliegende Aufgabe, ein Anwesenheitserfassungs-Terminal bereitzustellen, bei dem die Bedienung des Anwesenheitserfassungs-Terminals bzw. die Interaktion dieses mit Personen vereinfacht ist. Insbesondere soll die Gefahr von Fehlbuchungen, absichtlicher oder unabsichtlicher Art, reduziert werden.

Weiterhin liegt der vorliegenden Erfindung die Aufgabe zugrunde, ein entsprechendes computerimplementiertes Verfahren zum Betreiben eines Anwesenheitserfassungs-Terminals bzw. ein entsprechendes Computerprogramm bereitzustellen, um die Bedienung bzw. Interaktion zu vereinfachen, sowie die Gefahr von Fehlbuchungen zu reduzieren.

Erfindungsgemäß werden die genannten Aufgaben durch das vorschlagsgemäße Anwesenheitserfassungs-Terminal, insbesondere Zeiterfassungs-Terminal, zur Erfassung einer Anwesenheitsinformation einer Person auf Basis einer Aktion der Person, sowie durch das vorschlagsgemäße computerimplementierte Verfahren zum Betreiben eines Anwesenheitserfassungs-Terminals, sowie durch das vorschlagsgemäße Computerprogramm mit den Merkmalen der entsprechenden unabhängigen Ansprüche gelöst. Darüber hinaus sind bevorzugte Ausführungsformen den abhängigen Ansprüchen sowie der Beschreibung zu entnehmen.

Im Einzelnen ist ein Anwesenheitserfassungs-Terminal zur Erfassung einer Anwesenheitsinformation einer Person auf Basis einer Aktion der Person vorgeschlagen. Bei dem vorschlagsgemäßen Anwesenheitserfassungs-Terminal kann es sich insbesondere um ein Zeiterfassungs-Terminal handeln. Dabei umfasst das vorschlagsgemäße Anwesenheitserfassungs-Terminal:
- eine Steuereinheit,
- eine Speicherverwaltungseinheit, wobei die Speicherverwaltungseinheit zum Verarbeiten und Speichern der Anwesenheitsinformation der Person eingerichtet ist,
- wenigstens eine Sensoreinheit, wobei die Sensoreinheit zur Beobachtung einer Umgebungszone und zur Ausgabe einer aus der Beobachtung der Umgebungszone detektierten Präsenzinformation der Person eingerichtet ist,
- eine identification engine, wobei die identification engine zur Identifizierung der Person und zur Ausgabe einer Identifizierungsinformation eingerichtet ist, wobei die Identifizierung der Person auf Basis der detektierten Präsenzinformation der Person und/oder auf Basis zumindest einer weiteren personenbezogenen Information erfolgen kann, und
- eine intent engine, wobei die intent engine zur Erfassung einer Absicht einer Interaktion der Person mit dem Anwesenheitserfassungs-Terminal und zur Ausgabe einer Absichtsinformation eingerichtet ist.

Vorschlagsgemäß ist die Steuereinheit dazu eingerichtet, zumindest folgende Buchungsinformationen zu empfangen und zu verarbeiten:
- die Identifizierungsinformation von der identification engine, und
- die Absichtsinformation von der intent engine.

Die Steuereinheit ist dabei vorschlagsgemäß derart mit der Speicherverwaltungseinheit interagierend konfiguriert, dass, falls empfangene Buchungsinformationen mit vorgegebenen Buchungsinformationen übereinstimmen, die Anwesenheitsinformation der Person automatisch verarbeitet und gespeichert wird.

In Bezug auf das computerimplementierte Verfahren ist im Einzelnen ein computerimplementiertes Verfahren zum Betreiben eines Anwesenheitserfassungs-Terminals, insbesondere Zeiterfassungs-Terminal, zur Erfassung einer Anwesenheitsinformation einer Person auf Basis einer Aktion der Person vorgeschlagen, welches Verfahren zumindest die folgenden Schritte umfasst:
- Detektieren einer Präsenzinformation der Person, wobei eine detektierte Präsenzinformation mittels Beobachtens einer Umgebungszone mit wenigstens einer Sensoreinheit generiert wird,
- Identifizieren der Person durch eine identification engine, wobei eine Identifizierungsinformation auf Basis der detektierten Präsenzinformation der Person und/oder auf Basis zumindest einer weiteren personenbezogenen Information generiert wird,
- Erfassen einer Absicht einer Interaktion der Person mit dem Anwesenheitserfassungs-Terminal durch eine intent engine, wobei eine Absichtsinformation generiert wird,
- Verarbeiten und Speichern einer Anwesenheitsinformation der Person in einer Speicherverwaltungseinheit, falls zumindest bestimmt wird, dass die Identifizierungsinformation und die Absichtsinformation vorgegebenen Informationen entsprechen.

Die im Rahmen des vorschlagsgemäßen Anwesenheitserfassungs-Terminals beschriebenen Merkmale und Vorteile sind entsprechend auf das vorschlagsgemäße computerimplementierte Verfahren zum Betreiben eines Anwesenheitserfassungs-Terminals übertragbar. Dabei kann das computerimplementierte Verfahren zum Betreiben jenes vorschlagsgemäßen und beschriebenen Anwesenheitserfassungs-Terminals eingerichtet sein. Das vorschlagsgemäße und beschriebene Anwesenheitserfassungs-Terminal wiederum ist bevorzugt zur Ausführung des vorschlagsgemäßen computerimplementierten Verfahrens zum Betreiben eines Anwesenheitserfassungs-Terminals eingerichtet. Insofern werden die das Anwesenheitserfassungs-Terminal bzw. das Verfahren zum Betreiben des Anwesenheitserfassungs-Terminals betreffenden Merkmale und spezifische Vorteile regelmäßig gemeinsam nur einfach beschrieben. Im Zusammenhang mit der Vorrichtung des Anwesenheitserfassungs-Terminals beschriebene Merkmale sind entsprechend in das computerimplementierte Verfahren betreffende Ansprüche aufnehmbar.

Ein wesentlicher Vorteil der vorliegenden Erfindung ist, dass ein Buchungsvorgang am Anwesenheitserfassungs-Terminal vorgenommen werden kann, ohne dass eine aktive und den entsprechenden Buchungswunsch wiedergebende Handlung durch die interagierende Person am Anwesenheitserfassungs-Terminal selbst erfolgen muss. Vielmehr kann das Anwesenheitserfassungs-Terminal automatisch und selbständig sowohl die grundsätzlich die Person repräsentierende Identifizierungsinformation sowie eben auch die Absicht der Interaktion repräsentierende Absichtsinformation erfassen und automatisch einen Abgleich vornehmen, woraufhin bei erfolgreichem Abgleich der Buchungsvorgang durchgeführt wird. Jene Interaktionen zwischen Personen und Anwesenheitserfassungs-Terminal sind dabei aus der Distanz durchführbar, da die Grundlage der Erfassung die Beobachtung einer Umgebungszone mithilfe der Sensoreinheit des Anwesenheitserfassungs-Terminals ist. Ein direktes Interagieren der Person unmittelbar vor dem Anwesenheitserfassungs-Terminal kann möglich, muss aber nicht notwendig sein.

Die Steuereinheit kann als integraler Bestandteil des Anwesenheitserfassungs-Terminals ausgebildet sein oder auch separat. So kann die Steuereinheit beispielsweise auch an einem anderen Ort als innerhalb eines Gehäuses des Anwesenheitserfassungs-Terminals oder etwa online abgebildet sein und über eine Kommunikationsverbindung mit dem Anwesenheitserfassungs-Terminal kommunizieren und Vorgänge wie etwa Buchungsvorgänge steuern.

Die Speicherverwaltungseinheit kann lokal vorgesehen sein und beispielsweise integrierter Bestandteil des Anwesenheitserfassungs-Terminals sein. Alternativ kann die Speicherverwaltungseinheit ebenso online in einer Cloud vorgesehen sein. Sodann kann das Anwesenheitserfassungs-Terminal etwa über die Steuereinheit eine Onlineverbindung zu der Speicherverwaltungseinheit herstellen und auf diese Weise mit der Speicherverwaltungseinheit kommunizieren.

In der Speicherverwaltungseinheit können Stammsätze von Mitarbeiterdaten gespeichert sein. Dort hinterlegte personenspezifische Daten können beispielsweise Informationen über die Arbeitszeiten der Person, die Sprache, die die Person spricht, um eine spezifische Interaktion mit dem Anwesenheitserfassungs-Terminal zu ermöglichen, oder zwecks nutzerspezifischer Interaktion auch individuelle Vorlieben oder Voraussetzungen gespeichert sein. Beispielsweise kann dort hinterlegt sein, wenn eine Sehbehinderung oder Hörbehinderung einer Person vorliegt, um eine individuell an die Bedürfnisse angepasste Interaktion zu ermöglichen.

Die wenigstens eine Sensoreinheit beobachtet die Umgebungszone in der Nähe des Anwesenheitserfassungs-Terminals, wie etwa einen Flur eines Bürogebäudes beim Anwesenheitserfassungs-Terminal oder einen Eingangsbereich eines Gebäudes oder einer Etage. Hier werden die Personen erwartet, die in Interaktion mit dem Anwesenheitserfassungs-Terminal treten. Die Sensoreinheit kann einen oder mehrere Sensoren umfassen. Es können auch verschiedene Sensoreinheiten bzw. Sensoren vorgesehen sein. Die Sensoreinheit bzw. Sensoren können als integraler Bestandteil des Anwesenheitserfassungs-Terminals etwa in seinem Gehäuse eingebunden sein oder ganz oder teilweise außerhalb des regelmäßig an bzw. in der Nähe einer Wand montierten Anwesenheitserfassungs-Terminal angeordnet sein. Dann kann vorteilhaft eine Kommunikationsverbindung zwischen der Sensoreinheit und dem Anwesenheitserfassungs-Terminal, insbesondere seiner Steuereinheit, vorgesehen sein.

Die Sensoreinheit stellt auf Grundlage der Beobachtung eine detektierten Präsenzinformation der in der Umgebungszone erfassten Person bereit. Dabei kann es sich lediglich um die Information handeln, dass eine Person anwesend ist. Oder aber es kann auch ein höherer Detailgrad der detektierten Präsenzinformation vorliegen, indem etwa ein Foto der Person als detektierten Präsenzinformation ausgegeben wird.

Die identification engine kann auch Identifikationseinrichtung genannt werden. Sie stellt eine Einrichtung dar, um die Identität einer Person, die mit dem Anwesenheitserfassungs-Terminal in Interaktion tritt, festzustellen. Die identification engine kann durch eine Software im Anwesenheitserfassungs-Terminal bzw. im Rahmen der Steuereinheit realisiert sein. Über die identification engine wird eine Identifizierungsinformation ausgegeben. Dabei kann die Identifizierungsinformation die interagierende Person eindeutig repräsentieren oder sie einer Personen-Gruppe zuordnen.

Hierzu kann die identification engine die zuvor von der Sensoreinheit bereitgestellte detektierte Präsenzinformation nutzen. So kann etwa ein von der Sensoreinheit aufgenommenes Foto durch die identification engine analysiert und einer Person zugeordnet werden. Auch im Beispiel einer Erfassung durch die Sensoreinheit etwa mittels drahtloser Kommunikation mit einem mobilen Zutrittsmedium, wie etwa einer Zutrittskarte, einem Badge oder einem mobilen Endgerät der interagierenden Person, kann jene detektierte Präsenzinformation beispielsweise in Form der Kennung der Schlüsselkarte in der identification engine weiterverarbeitet und zur Identifizierung genutzt werden.

Alternativ oder zusätzlich kann die Identifizierung auch auf Grundlage zumindest einer weiteren personenbezogenen Information erfolgen. So ist denkbar, dass auch die identification engine über eigene Sensoren verfügt, oder aber etwa dass die Sensoreinheit zunächst eine detektierte Präsenzinformation bereitstellt, die lediglich grundsätzlich die Anwesenheit einer Person repräsentiert, und sodann von der Sensoreinheit eine weitere personenbezogene Information eingeholt wird, die der Identifizierung der Person dient.

Die weitere personenbezogene Information muss keine persönlichen Daten umfassen, sondern nur eine Eindeutigkeit der Person bzw. eindeutige Unterscheidbarkeit einer Person von anderen Personen ermöglichen.

Die intent engine kann auch Absichtserkennungseinrichtung genannt werden. Sie stellt eine Einrichtung dar, um die Absicht der Interaktion einer Person mit dem Anwesenheitserfassungs-Terminal festzustellen. Es wird durch die intent engine eine entsprechende Absichtsinformation ausgegeben. Die intent engine kann durch eine Software im Anwesenheitserfassungs-Terminal realisiert sein.

Dabei können verschiedene Daten von der intent engine zugrunde gelegt werden, um die Absicht der Person zu erfassen. So können zum einen im Stammsatz der Person hinterlegte Daten als eine Variable zur Auswertung zur Verfügung stehen, etwa wenn die Schicht bzw. die Arbeitszeit der interagierenden Person beginnt bzw. es sich allgemein um eine Uhrzeit zu Beginn des Arbeitstages handelt und die Person am Anwesenheitserfassungs-Terminal erscheint, um sich vermutlich zur Arbeit einzubuchen. Es können auch die durch die Sensoreinheit oder andere Sensoren erfassten Bewegungsdaten zugrunde gelegt werden. Beispielsweise kann zur Erfassung dienen, ob sich eine Person in Richtung Gebäudeinneres oder in Richtung Ausgang bewegt.

Es ist auch möglich, dass mehr Aktionen am Anwesenheitserfassungs-Terminal vorgenommen werden können als lediglich Einbuchungs- oder Ausbuchungsvorgänge. So kann es möglich sein, dass eine Person etwa ein auf seiner Schlüsselkarte oder seinem Badge hinterlegtes Guthaben, etwa zur Nutzung in einer Kantine, abfragen möchte. Die intent engine kann dann beispielsweise auch die Uhrzeit in die Analyse einfließen lassen, welche Absicht hinter der Interaktion der Person mit dem Anwesenheitserfassungs-Terminal liegt, da etwa insbesondere zu Mittagszeiten regelmäßig das Guthaben abgefragt wird.

Auch vorbestimmte Arten von Bewegungen, etwa der Schlüsselkarte bzw. des Badges, durch die Person, die mit dem Anwesenheitserfassungs-Terminal interagiert, können repräsentativ für eine bestimmte Absicht stehen, welche die intent engine sodann erkennt und eine entsprechende Absichtsinformation ausgibt. Dabei können auch Absichten einer Interaktion mit dem Anwesenheitserfassungs-Terminal existieren, welche Absichten keine eindeutige Identifizierung der Person erfordern. So kann es bei solchen Absichten ausreichend sein, die detektierte Person einer Personen-Gruppe zuzuordnen, die etwa grundsätzlich mit dem Anwesenheitserfassungs-Terminal interagieren kann bzw. darf.

Insbesondere im letztgenannten Fall kann die Identifizierungsinformation vorteilhaft auch nachgelagert verarbeitet werden bzw. vorteilhaft die identification engine nach der intent engine arbeiten. Wenn das konkrete Identifizieren der Person (also etwa eine eindeutige Zuweisung, um welche/-n Mitarbeiter/-in es sich konkret handelt) für die gewünschte Interaktion und entsprechende erstellte Absichtsinformation nicht notwendig ist, dann kann die identification engine auch lediglich eine vereinfachte Identifizierungsinformation etwa in Form der Zugehörigkeit zur zugelassenen Personen-Gruppe ausgeben, ohne eine vertiefte Analyse vorzunehmen, um welche Person es sich konkret handelt.

In dem entsprechenden vorschlagsgemäßen computerimplementierten Verfahren müssen die beiden Schritte des Identifizierens der Person sowie des Erfassens einer Absicht einer Interaktion der Person mit dem Anwesenheitserfassungs-Terminal also nicht zwingend in der genannten Reihenfolge ablaufen, sondern können vielmehr auch umgekehrt (erst Erfassen der Absicht, dann Identifizieren der Person) oder gar parallel ablaufen.

Die Steuereinheit empfängt die Identifizierungsinformation, welche repräsentativ für die interagierende Person oder Personen-Gruppe steht, von der identification engine bzw. bekommt diese von der identification engine bereitgestellt, die auch selbst in die Steuereinheit integriert sein kann. Ferner empfängt die Steuereinheit die Absichtsinformation, welche repräsentativ für die Absicht der Interaktion steht, von der intent engine bzw. bekommt diese von der intent engine bereitgestellt, die auch selbst in die Steuereinheit integriert sein kann. Jene beiden Informationen verarbeitet die Steuereinheit als Buchungsinformationen. Dabei findet automatisch ein Abgleich statt, indem die Steuereinheit mit der Speicherverwaltungseinheit interagiert. Es werden die empfangenen Buchungsinformationen (Identifizierungsinformation und Absichtsinformation) mit vorgegebenen Buchungsinformationen, welche in der Speicherverwaltungseinheit personenspezifisch bzw. spezifisch für die erkannte Personen-Gruppe hinterlegt sind, miteinander verglichen. Stimmen jene empfangenen sowie vorgegebenen Buchungsinformationen ein, so wird die entsprechende Buchung umgesetzt, sprich es wird die Anwesenheitsinformation der Person automatisch verarbeitet und gespeichert.

Im vorschlagsgemäßen Anwesenheitserfassungs-Terminal bzw. während des vorschlagsgemäßen computerimplementierten Verfahrens findet also grundsätzlich in einem ersten Schritt eine Detektion der Person statt, in einem zweiten Schritt eine Identifikation jener Person, in einem dritten Schritt eine Feststellung über die Absicht der Interaktion (wobei Schritt zwei und drei auch umgekehrt bzw. parallel ablaufen können), sowie in einem vierten Schritt dann automatisch eine entsprechende Buchung oder eben nicht. Auf diese Weise werden Buchungsvorgänge an Anwesenheitserfassungs-Terminals automatisiert und erheblich vereinfacht. Denn Grundlage des beschriebenen Vorgangs stellen automatisch über die Sensoreinheit erfasste Daten, sowie in der Speicherverwaltungseinheit hinterlegt personenspezifische Daten dar.

Nach einer Ausführungsform ist vorgeschlagen, dass die Steuereinheit ferner zum Empfangen und zum Verarbeiten der detektierten Präsenzinformation der Person von der Sensoreinheit eingerichtet ist. Insbesondere kann die detektierte Präsenzinformation selbst auch eine weitere Buchungsinformation darstellen, welche Buchungsinformation mit einer vorgegebenen Buchungsinformation abgeglichen wird und von welcher Buchungsinformation somit die automatische Umsetzung des Buchungsvorgangs abhängig gemacht wird.

Nach einer weiteren Ausführungsform ist vorgeschlagen, dass die Umgebungszone in eine Mehrzahl an Unterzonen aufgeteilt ist. Vorzugsweise umfasst die Mehrzahl an Unterzonen zumindest folgende Unterzonen:
- eine Nahzone, sowie
- eine Fernzone,
wobei die Nahzone näher an dem Anwesenheitserfassungs-Terminal angeordnet ist als die Fernzone. Dabei gibt die Sensoreinheit insbesondere eine spezifische detektierte Präsenzinformation der Person in Abhängigkeit von einem bzw. mehreren zonenspezifischen Signal bzw. Signalen aus, wobei das/die zonenspezifische/zonenspezifischen Signal/Signale durch die Person in der Unterzone ausgelöst wird bzw. werden. Die Nahzone ist dem Anwesenheitserfassungs-Terminal folglich am nächsten angeordnet. Unter Auslösen eines zonenspezifischen Signal ist nicht ausschließlich beschränkend zu verstehen, dass eine Person etwa aktiv ein Signal auslösen müsste. Vielmehr wird das zonenspezifische Signal durch die Person hervorgerufen, etwa durch die Anwesenheit bzw. durch die Art einer Fortbewegung der Person in der jeweiligen Unterzone. So kann beispielsweise über ein Kamera-Tracking eine Person in der Unterzone bzw. deren Bewegung verfolgt werden und daraus ein zonenspezifisches Signal generiert werden. Das zonenspezifische Signal kann durch die Anwesenheit bzw. die Bewegung der Person in der Unterzone bewirkt bzw. hervorgerufen werden.

Vorzugsweise kann die spezifische detektierte Präsenzinformation der Person eine Information bzw. mehrere Informationen über folgende Umstände umfassen:
- in welcher Unterzone sich die Person befindet, und/oder
- in welche Unterzone sich die Person begibt, und/oder
- wie ein Bewegungsmuster der Person aussieht.

Das Bewegungsmuster der Person kann sich insbesondere darauf beziehen, wie eine Bewegungsrichtung der Person und/oder eine Bewegungsgeschwindigkeit der Person ist. Die Bewegungsrichtung kann dabei über einen Richtungsvektor über die Zeit repräsentiert sein. Hierüber kann das Bewegungsmuster der Person innerhalb einer Umgebungszone bzw. Unterzone erfasst und etwa der Analyse der Absicht der Interaktion zugrunde gelegt werden. Mit der Information, in welche Unterzone sich eine Person begibt, wird ein Zonenwechsel einer Person erfassbar und kann der Analyse zugrunde gelegt werden.

Das technische Mittel zur Erkennung der Position, also der Anwesenheit, bzw. der Bewegung der Person etwa in einer Unterzone kann vorteilhaft die Sensoreinheit sein. Die Sensoreinheit umfasst dabei vorteilhaft eine Kamera.

Die Feststellung der Anwesenheit der Person, in welcher Unterzone diese sich gerade konkret befindet, oder der Bewegungsmuster der Person können somit vorteilhaft zur Interpretation der Absicht der Person mit dem Anwesenheitserfassungs-Terminal genutzt werden.

Nach einer vorteilhaften Weiterbildung kann die spezifische detektierte Präsenzinformation der Person mittels Machine Learning analysiert werden und beispielsweise eine Absicht der Interaktion der Person erfasst werden. Hierzu kann beispielsweise ein Abgleich eines erfassten Verhaltens der Person, wie etwa eines Bewegungsmusters, mit bekannten angelernten Verhalten bzw. Bewegungsmustern erfolgen. Dazu kann die Steuereinheit bzw. identification engine bzw. intent engine eine KI mit einer Machine Learning engine aufweisen.

Zudem bzw. alternativ können die unterschiedlichen engines (Einrichtungen) des Anwesenheitserfassungs-Terminals bzw. der Steuereinheit oder aber auch unterschiedliche Sensoren (der Sensoreinheit) erst abhängig davon aktiviert werden, wenn eine Person sich in einer bestimmten Unterzone befindet oder sich auf eine bestimmte Weise in einer Unterzone bewegt oder diese betritt. So kann sich beispielsweise die identification engine sowie auch die intent engine in einem Sleep Mode (Energiesparmodus) befinden, bis die Sensoreinheit die Anwesenheit in einer bestimmten Unterzone detektiert hat.

Weiterhin kann vorgesehen sein, dass die identification engine derart eingerichtet ist, dass sie erst aktiviert wird, wenn die Person die Umgebungszone, insbesondere die Nahzone, betritt. Vorzugsweise kann die Aktivierung der identification engine derart in Abhängigkeit von einem bzw. dem Bewegungsmuster der Person, insbesondere von einer Bewegungsrichtung der Person und/oder einer Bewegungsgeschwindigkeit der Person, erfolgen. Ein Beispiel kann sein, dass eine schnellere Bewegung einer Person detektiert wird, welche sodann zu einer Aktivierung der identification engine führt. In vorteilhafter Weise kann das Anwesenheitserfassungs-Terminal sodann energiesparender ausgeführt sein. Auf diese Weise kann zudem eine Interaktion mit dem Anwesenheitserfassungs-Terminal bedienerfreundlicher und schneller ablaufen, da eine zweistufige Aktivierung der identification engine in einer geringeren Zeit resultiert, bis das System aktiv ist.

Alternativ oder zusätzlich kann vorgesehen sein, dass die Mehrzahl an Unterzonen ferner eine mittlere Zone umfasst, wobei die mittlere Zone näher an dem Anwesenheitserfassungs-Terminal angeordnet ist als die Fernzone. Der Detailgrad der Analyse der Bewegungen bzw. des Aufenthalts kann somit vorteilhaft weiter erhöht sein und somit die Interpretation der Bewegung der Person zwecks Erfassung der Absicht der Interaktion verbessert sein.

Nach einer weiteren Ausführungsform ist vorgeschlagen, dass die identification engine ferner zur Verifizierung der Person und zur Ausgabe einer Verifizierungsinformation eingerichtet ist, wobei die Verifizierung der Person auf Basis der detektierten Präsenzinformation der Person und/oder auf Basis der weiteren personenbezogenen Information erfolgt. Über die zusätzliche zweite Schleife in Form der Verifizierung der Person, die nach der grundsätzlichen Identifizierung zusätzlich abläuft, kann die Gefahr von Fehlbuchungen reduziert werden. So kann vorteilhaft verhindert werden, dass eine Person für einen anderen Dritten eine Buchung vornimmt. Der Buchungsvorgang kann ebenso von jener Verifizierungsinformation abhängig gemacht werden, indem die Verifizierungsinformation als weitere Buchungsinformation dient, die mit eine entsprechenden hinterlegten Buchungsinformation abgeglichen wird.

Weiterhin kann vorgesehen sein, dass die identification engine wenigstens eine Anti-Spoofing engine zur Differenzierung zwischen einer realen Person und einem Foto einer Person umfasst. Auf diese Weise kann vorteilhaft erkannt werden, falls eine bewusste Täuschung etwa dahingehend durch eine Person unternommen wird, indem die Person ein Foto der Sensoreinheit, sprich in diesem Fall einer Kamera, vorhält und somit versucht einen Buchungsvorgang auszulösen.

Nach einer weiteren Ausführungsform ist vorgesehen, dass die Sensoreinheit wenigstens eine der folgenden Einheiten umfasst:
- wenigstens eine Kamera,
- wenigstens einen biometrischen Sensor,
- wenigstens einen Annäherungssensor und/oder
- wenigstens eine mobile access engine.

Insbesondere über die Kamera kann über ein Kamera-Tracking vorteilhaft die Bewegung oder aber auch die Körperhaltung der Analyse zugrunde gelegt werden, um welche Person es sich handelt und welche Absicht der Interaktion gewünscht ist. Im Falle eine mobile access engine (mobile Zutrittseinrichtung) kann die mobile access engine der Sensoreinheit so konfiguriert ist, dass, zum Detektieren der Präsenzinformation der Person, ein Kommunikationsaustausch zwischen der mobile access engine und einem mobilen Zutrittsmedium der Person stattfindet. Die mobile access engine kann dabei als Software in dem Anwesenheitserfassungs-Terminal bzw. in der Sensoreinheit realisiert sein bzw. eine Software umfassen, über welche Software der Kommunikationsaustausch zwischen der Person und der Sensoreinheit ausgewertet und gegebenenfalls die detektierte Präsenzinformation erzeugt und ausgegeben werden kann. Eine kontaktlose Erkennung der Person durch die Sensoreinheit und somit Interaktion der Person mit dem Anwesenheitserfassungs-Terminal ist besonders vorteilhaft, da die Notwendigkeit eines nahen Herantretens der Person an das Anwesenheitserfassungs-Terminal entfällt.

Nach einer weiteren Ausführungsform kann die identification engine wenigstens eine der folgenden Einheiten umfassen:
- wenigstens eine Kamera,
- wenigstens einen biometrischen Sensor, und/oder
- wenigstens eine mobile access engine.

Im Falle der mobile access engine (mobile Zutrittseinrichtung) ist die mobile access engine der identification engine so konfiguriert, dass, zur Identifizierung der Person, ein Kommunikationsaustausch zwischen der mobile access engine und einem mobilen Zutrittsmedium der Person stattfindet. Über eine eigene Erfassung von personenspezifischen Daten mittels wenigstens einer der genannten Einheiten der identification engine kann vorteilhaft eine genaue Identifizierung der Person, welche mit dem Anwesenheitserfassungs-Terminal interagiert, erfolgen.

Nach einer weiteren Ausführungsform kann das mobile Zutrittsmedium der Person als Zutrittskarte, Badge und/oder mobiles Endgerät ausgebildet sein. Auf diese Weise kann eine besonders einfache kontaktlose Kommunikation zwischen der Person und dem Anwesenheitserfassungs-Terminal ablaufen.

Nach einer weiteren Ausführungsform kann die intent engine derart konfiguriert sein, dass, zur Erfassung der Absicht der Interaktion der Person mit dem Anwesenheitserfassungs-Terminal, wenigstens eine der folgenden Informationen verwendet wird:
- eine Bewegungsrichtung der Person, und/oder
- eine Signaleingabe durch die Person.

Im Falle der Erfassung der Absicht auf Grundlage der Bewegungsrichtung kann die intent engine ferner derart konfiguriert sein, dass die Bewegungsrichtung über ein Kamera-Tracking und/oder per Ultra-Wideband Signal erfasst wird. Vorteilhaft kann die Interaktion zwischen Person und Anwesenheitserfassungs-Terminal auf diese Weise kontaktlos aus der Distanz stattfinden, sowie erfordert weiterhin auch keine individuelle Eingabe durch die Person, etwa am Anwesenheitserfassungs-Terminal selbst. So können grundsätzlich Bewegungsrichtungen oder auch bestimmte Bewegungen der Person selbst oder beispielsweise ihres mobilen Zutrittsmediums repräsentativ für bestimmte Absichten einer Interaktion stehen.

Im genannten Fall einer Signaleingabe durch die Person kann die intent engine ferner derart konfiguriert sein, dass die Signaleingabe wie folgt erfolgt:
- die intent engine empfängt ein von der Person an einem/dem mobilen Endgerät eingegebenes, die Absicht der Interaktion repräsentierendes Signal, und/oder
- die intent engine empfängt eine die Absicht der Interaktion repräsentierende Spracheingabe von der Person oder erkennt eine die Absicht der Interaktion repräsentierende Gesteneingabe von der Person, und/oder
- die intent engine verarbeitet ein von der Person an dem Anwesenheitserfassungs-Terminal, bevorzugt an einem Touchscreen-Display, eingegebenes und die Absicht der Interaktion repräsentierendes Signal, und/oder
- die intent engine empfängt ein von der Person mittels einer Aktion mit einer/der Zutrittskarte, einem/dem Badge, und/oder einem/dem mobilen Endgerät getriggertes, die Absicht der Interaktion repräsentierendes Signal.

Dabei kann die Aktion der Person mit ihrem mobilen Zutrittsmedium, wie dem Badge, eine eigentlich übliche Bewegung zur Initiierung eines Buchungsvorgangs sein (Vorhalten des Badges), wobei eine vorbestimmte Bewegungsabfolge, wie beispielsweise ein doppeltes, schnell hintereinander wiederholt durchgeführtes Vorhalten des Badges eine bestimmte Absicht repräsentiert.

Nach einer weiteren Ausführungsform kann ferner eine interaction confirmation engine (Interaktionsbestätigungseinrichtung) vorgesehen sein. Dabei kann die interaction confirmation engine zum Empfangen einer klarstellenden Absichtsinformation eingerichtet sein, wobei die klarstellende Absichtsinformation die Absicht der Interaktion der Person mit dem Anwesenheitserfassungs-Terminal verifiziert oder falsifiziert. Insbesondere kann die klarstellende Absichtsinformation eine weitere Buchungsinformation für die Steuereinheit darstellen. Auf diese Weise ist vorteilhaft ein weiteres Back Up für den Buchungsvorgang vorgesehen. Die klarstellende Absichtsinformation kann die zuvor bereits durch das Anwesenheitserfassungs-Terminal erfasste Absicht nochmals bestätigen oder verneinen. Die interaction confirmation engine kann zumindest teilweise als Software in dem Anwesenheitserfassungs-Terminal bzw. in der Steuereinheit realisiert sein, über welche Software entsprechende Signale bzw. Handlungen der Person zur Bestätigung bzw. Verneinung der zuvor erfassten Absicht ausgewertet werden können.

Nach einer weiteren Ausführungsform kann die interaction confirmation engine als voice detection engine (Spracherkennungseinrichtung) zur Erfassung einer Spracheingabe durch die Person und/oder als gesture detection engine (Gestenerkennungseinrichtung) zur Erfassung einer Gesteneingabe durch die Person ausgebildet sein. Auf diese Weise kann durch die Person über eine einfache Spracheingabe oder über eine vorbestimmte Geste die zuvor durch das Anwesenheitserfassungs-Terminal erfasste Absicht bestätigt werden. Die Sicherheit der Buchungsvorgänge dahingehend, dass keine Fehlbuchungen stattfinden, kann weiter erhöht werden. Die voice detection engine gesture und/oder die detection engine kann als Software ausgeführt sein oder eine Software umfassen.

Nach einer weiteren Ausführungsform kann ferner eine Feedback engine (Rückmeldungseinrichtung) vorgesehen sein. Die Feedback engine kann dabei derart eingerichtet sein, dass, wenn die Interaktion der Person mit dem Anwesenheitserfassungs-Terminal erfolgt ist, eine Feedback-Information ausgegeben werden kann. Jene Feedback-Information kann vorteilhaft der Information der Person dienen, welche Buchung gewünscht ist oder gar vorgenommen wurde. Diese Feedback-Information kann auch Grundlage für den zuvor beschriebenen Ablauf sein, dass eine klarstellende Absichtsinformation für die interaction confirmation engine bereitgestellt werden soll. So kann abhängig von dem einer Person zurückgemeldeten Feedback diese Person eine positive klarstellende Absichtsinformation dem Anwesenheitserfassungs-Terminal zur Verifizierung der Absicht übermitteln oder eben eine negative, um die geplante Aktion bzw. Buchung zu verhindern.

Insbesondere kann dabei die Feedback-Information wie folgt ausgebildet sein:
- ein Sprachsignal, und/oder
- ein grafisches Signal, und/oder
- ein haptisches Signal, insbesondere ein Vibrationssignal.

Die Feedback-Information kann am Anwesenheitserfassungs-Terminal und/oder an einem/dem mobilen Zutrittsmedium der Person ausgegeben werden. Unter einem Sprachsignal kann auch ein einfaches akustisches Signal verstanden werden.

Die Feedback-Information kann insbesondere auch eine Aufforderung oder eine Benutzerinformationen umfassen, mit der ein Unterhalter des Anwesenheitserfassungs-Terminals (z.B. Arbeitgeber) die Person, die als Benutzer mit dem Anwesenheitserfassungs-Terminal interagiert, zu etwas auffordert (z.B. Aufforderung "bei Personalabteilung melden", "bitte Überstunden reduzieren" etc.) oder diese über etwas informiert (z.B. Zeitkontostand).

Es kann vorgesehen sein, dass sensible personenspezifische Informationen nur auf einem mobilen Endgerät der Person ausgeben werden, während allgemeine und nicht sensible Informationen nur auf dem Terminal oder auf dem Terminal sowie dem mobilen Endgerät ausgeben werden.

Die Feedback engine kann zumindest teilweise als Software in dem Anwesenheitserfassungs-Terminal bzw. in der Steuereinheit realisiert sein, über welche Software zum einen mithilfe der Speicherverwaltungseinheit überprüft werden kann, ob die Person überhaupt ein Feedback wünscht und, zum anderen, das entsprechende Feedback veranlasst werden kann. Dementsprechend kann die Feedback engine bzw. die Steuereinheit in Kommunikationsverbindung mit einer Sprachausgabeeinheit stehen, falls etwa ein Sprachsignal als Feedback-Information gewünscht ist.

Nach einer weiteren Ausführungsform kann die Speicherverwaltungseinheit einen Stammsatz personenspezifischer Daten umfassen, wobei die Speicherverwaltungseinheit derart eingerichtet ist, dass, wenn die Anwesenheitsinformation gespeichert worden ist, die Speicherverwaltungseinheit in den Daten der Person überprüft, ob ein Feedback zu der Interaktion der Person mit dem Anwesenheitserfassungs-Terminal gewünscht ist. Auf diese Weise kann die Interaktion zwischen Personen und Anwesenheitserfassungs-Terminal vorteilhaft individualisiert und besonders bedienerfreundlich, da spezifisch für die jeweilige Person, ablaufen. Besonders vorteilhaft kann etwa im Stammsatz der personenspezifischen Daten vor Ausgabe einer Feedback-Information kontrolliert werden, ob die konkrete Person, die die Interaktion durchführt und zuvor identifiziert wurde, überhaupt ein Feedback wünscht, bzw. falls ja, in welcher Form das Feedback gewünscht ist. Die Feedback engine kann demnach derart eingerichtet sein, dass eine personenabhängige Feedback-Information ausgegeben werden kann. So kann beispielsweise ein Sprachsignal als Feedback in derjenigen Sprache erfolgen, die die interagierende Person spricht. Ferner kann auch für die Person spezifisch hinterlegt sein, ob überhaupt ein sprachliches Feedback oder etwa ein grafisches oder haptisches Feedback erwünscht ist. Außerdem kann auf die individuellen Bedürfnisse der Personen eingegangen werden. So kann im Fall eine Hörbehinderung einer Person auf ein Sprachsignal als Feedback-Information verzichtet werden, sondern nur ein grafischen und/oder haptisches Signal ausgegeben werden. Im Falle einer Person mit Sehbehinderung etwa kann beispielsweise bevorzugt auf ein akustisches bzw. sprachliches Signal oder haptisches Signal zurückgegriffen werden.

Weiterhin wird die Aufgabe durch ein Computerprogramm gelöst, welches Computerprogramm Befehle umfasst, die bei der Ausführung des Programms durch einen Prozessor eines Anwesenheitserfassungs-Terminals das Anwesenheitserfassungs-Terminal veranlassen, die Schritte des zuvor bzw. nachfolgend beschriebenen vorschlagsgemäßen Verfahrens auszuführen. Weiterhin wird ein computerlesbares Medium vorgeschlagen, auf dem das zuvor genannte Computerprogramm gespeichert ist.

Weitere vorteilhafte und bevorzugte Ausgestaltungen ergeben sich aus der nachfolgenden Beschreibung mit Bezug auf die Figuren. In den lediglich Ausführungsbeispiele wiedergebenden Zeichnungen zeigt
- Figur 1: eine schematische Konfiguration eines Ausführungsbeispiels des vorschlagsgemäßen Anwesenheitserfassungs-Terminals;
- Figur 2: eine schematische Konfiguration eines Ausführungsbeispiels einer identification engine des vorschlagsgemäßen Anwesenheitserfassungs-Terminals;
- Figur 3: eine schematische Draufsicht auf eine Anordnung eines vorschlagsgemäßen Anwesenheitserfassungs-Terminals in einem Flur;

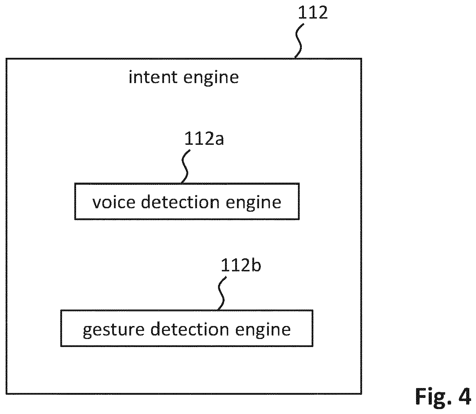

- Figur 4: eine schematische Konfiguration eines Ausführungsbeispiels einer intent engine des vorschlagsgemäßen Anwesenheitserfassungs-Terminals;
- Figur 5: ein Flussdiagramm der Verfahrensschritte eines vorschlagsgemäßen computerimplementierten Verfahrens zum Betreiben eines Anwesenheitserfassungs-Terminals; und
- Figur 6: eine schematische Konfiguration eines Ausführungsbeispiels einer Steuereinheit des vorschlagsgemäßen Anwesenheitserfassungs-Terminals.

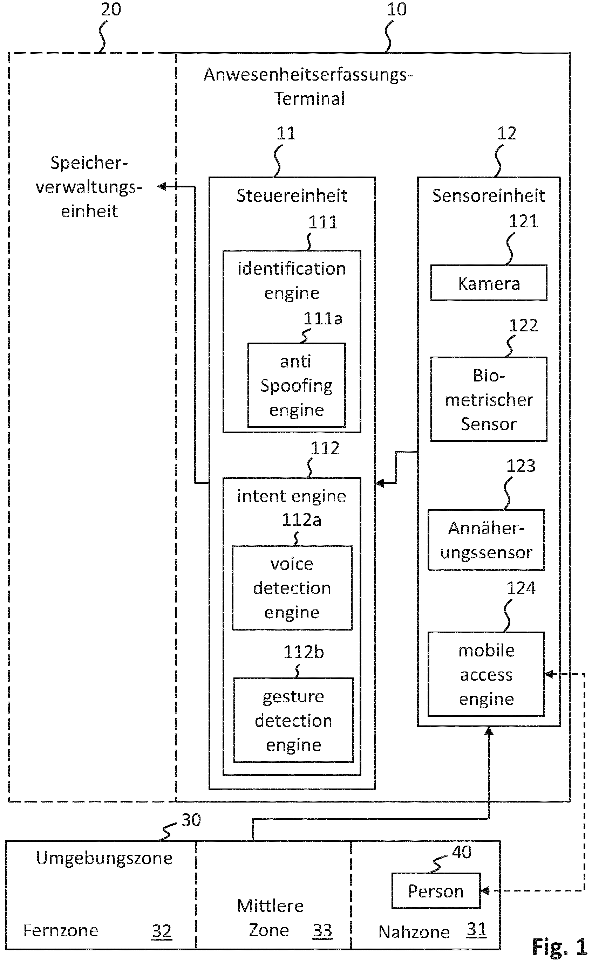

In Figur 1 ist schematisch die Konfiguration eines Ausführungsbeispiels eines vorschlagsgemäßen Anwesenheitserfassungs-Terminals 10 dargestellt. Bei dem Anwesenheitserfassungs-Terminal 10 handelt es sich um ein Zeiterfassungs-Terminal, welches dem Zweck dient, eine Zeiterfassung von Mitarbeitern/-innen beispielsweise am Eingang eines Unternehmensgebäudes zu ermöglichen. Konkret können an dem Zeiterfassungs-Terminal unterschiedliche Buchungsvorgänge durchgeführt und somit unterschiedliche Anwesenheitsinformationen gespeichert bzw. verarbeitet werden. So kann ein Mitarbeiter/eine Mitarbeiterin etwa seine/ihre Anwesenheit einbuchen oder ausbuchen, wenn dieser/diese etwa eine Pause macht oder sein/ihr Arbeitstag beendet ist.

Das Anwesenheitserfassungs-Terminal 10 ist demnach zur Erfassung einer Anwesenheitsinformation einer Person 40 auf Basis einer Aktion der Person 40 eingerichtet. Das Anwesenheitserfassungs-Terminal 10 umfasst, wie in Figur 1 dargestellt, eine Steuereinheit 11, eine Sensoreinheit 12, sowie eine Speicherverwaltungseinheit 20.

Die Speicherverwaltungseinheit 20 kann dabei lokal vorgesehen und beispielsweise integrierter Bestandteil des Anwesenheitserfassungs-Terminals 10 sein oder die Speicherverwaltungseinheit 20 kann ebenso online in einer Cloud vorgesehen sein. Dies ist in Figur 1 über die gestrichelten Linien angedeutet. Sodann kann das Anwesenheitserfassungs-Terminal 10 etwa über die Steuereinheit 11 eine Onlineverbindung zu der Speicherverwaltungseinheit 20 herstellen und auf diese Weise mit der Speicherverwaltungseinheit 20 kommunizieren.

In der Speicherverwaltungseinheit 20 sind Stammsätze der Personen 40, welche Personen 40 mit dem Anwesenheitserfassungs-Terminal 10 interagieren, hinterlegt. In den Stammsätzen können personenspezifische Daten, beispielsweise mitarbeiterspezifische Informationen wie etwa die Arbeitszeiten, gespeichert sein. Die personenspezifischen Daten stehen dem Anwesenheitserfassungs-Terminal 10 bzw. dessen Steuereinheit 11 via Kommunikationsverbindung zwischen Speicherverwaltungseinheit 20 und Steuereinheit 11 zur Verfügung. Die Speicherverwaltungseinheit 20 verarbeitet und speichert zudem bestimmungsgemäß die Anwesenheitsinformation der Person 40, beispielsweise, dass diese nun zur Arbeit erschienen ist und ihre Arbeitszeiterfassung beginnen soll.

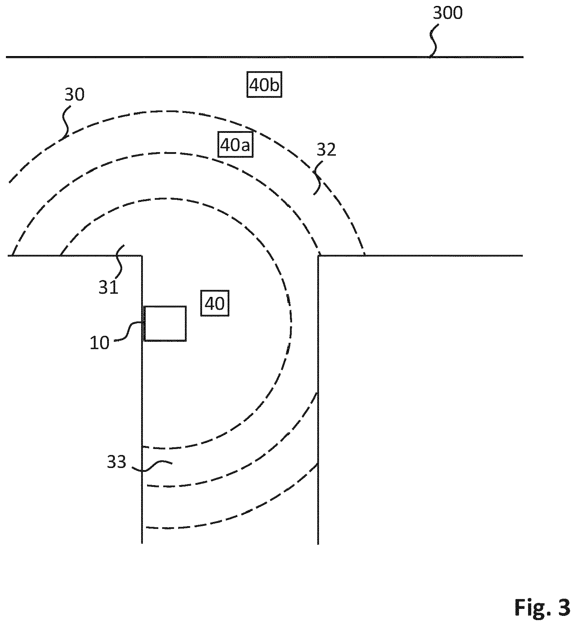

Das Anwesenheitserfassungs-Terminal 10 weist hierzu die Sensoreinheit 12 auf. Die Sensoreinheit 12 beobachtet eine Umgebungszone 30, welche Umgebungszone 30 das Anwesenheitserfassungs-Terminal 10 umgibt (vgl. ebenso Figur 3). Die Sensoreinheit 12 empfängt demnach Signale aus der Umgebungszone 30, wie durch den Pfeil in Figur 1 angedeutet.

Die Sensoreinheit 12 kann zur Beobachtung der Umgebungszone 30 unterschiedliche Einheiten aufweisen. Im Ausführungsbeispiel der Figur 1 weist die Sensoreinheit 12 die vier folgenden Einheiten auf: eine Kamera 121, einen biometrischen Sensor 122, einen Annäherungssensor 123 und eine mobile access engine 124. Dabei kann die Sensoreinheit 12 auch nur eine der Einheiten oder unterschiedliche Kombinationen der Einheiten aufweisen. Auch das Vorsehen zweier typgleicher Einheiten, etwa zweier Kameras 121 ist möglich. Es können auch mehrere separat operierende Sensoreinheiten unterschiedlicher Konfigurationen vorgesehen sein.

Über die genannten Einheiten der Sensoreinheit 12 wird die Anwesenheit der Person 40 in der Umgebungszone 30 erfasst, sodass die detektierte Präsenzinformation der Person 40 ausgegeben werden kann. Hierzu beobachtet beispielsweise die auf die Umgebungszone 30 gerichtete Kamera 121 den entsprechenden Raum, zum Beispiel einen das Anwesenheitserfassungs-Terminal 10 umgebenden Flur (300 in Figur 3), und erkennt mittels Bildverarbeitung, sobald die Person 40 die Umgebungszone 30 betritt.

Der biometrische Sensor 122 der Sensoreinheit 12 kann wiederum eine direkte Aktion der Person 40 an der Sensoreinheit 12 und somit am Anwesenheitserfassungs-Terminal 10 erfassen. Hierzu kann beispielsweise die Person 40 an dem biometrischen Sensor 122 einen Fingerabdruckscan durchführen oder ein sonstiges Signal auslösen.

Der Annäherungssensor 123 der Sensoreinheit 12 kann in verschiedenen Ausführungsformen ausgestaltet sein und die Anwesenheit der Person 40 in der Umgebungszone 30 kontaktlos erfassen.

Die mobile access engine 124 (mobile Zutrittseinrichtung) der Sensoreinheit 12 erfasst die Anwesenheit der Person 40 in der Umgebungszone 30 über einen Kommunikationsaustausch zwischen der mobile access engine 124 und der Person 40, konkret einem mobilen Zutrittsmedium der Person 40. Bei dem mobilen Zutrittsmedium der Person 40 kann es sich um eine Zutrittskarte handeln, wie etwa eine Schlüsselkarte. Es kann auch ein schlüsselloser Transponder (Badge) verwendet werden oder aber auch ein mobiles Endgerät der Person 40, welches mobile Endgerät über eine spezifische Anwendung zur Kommunikation mit der mobile access engine 124 verfügt.

Die mobile access engine 124 der Sensoreinheit 12 ist derart konfiguriert, dass ein in Figur 1 über den gestrichelten Doppelpfeil angedeuteter Kommunikationsaustausch zwischen der mobile access engine 124 und dem mobilen Zutrittsmedium der Person stattfindet, um die Anwesenheit der Person 40 zu erfassen und die detektierte Präsenzinformation ausgeben zu können.

Beispielsweise kann der schlüssellose Transponder (Badge) oder die Zutrittskarte der Person 40 auch mit RFID- oder auch mit UWB-Technologie (Ultra-Wideband) ausgestattet sein. Ein entsprechendes RFID- oder UWB-Modul der mobile access engine 124 detektiert sodann, wenn die Person 40 die Umgebungszone 30 betritt. Diese Funktion ist auch über eine Anwendung auf dem mobilen Endgerät der Person 40 realisierbar.

Die mobile access engine 123 kann als Software in dem Anwesenheitserfassungs-Terminal 10 bzw. in der Sensoreinheit 12 realisiert sein bzw. eine Software umfassen, über welche Software der Kommunikationsaustausch zwischen der Person 40 und der Sensoreinheit 12 ausgewertet und gegebenenfalls die detektierte Präsenzinformation erzeugt und ausgegeben wird.

Beobachtet die Sensoreinheit 12 etwa auf eine der beschriebenen Weisen, dass sich eine Person 40 in der Umgebungszone 30 befindet bzw. die Umgebungszone 30 betritt, so gibt die Sensoreinheit 12 eine detektierte Präsenzinformation der Person 40 aus. Eine beispielsweise in die Steuereinheit 11 integrierte identification engine 111 (Identifikationseinrichtung) kann auf der Grundlager jener detektierten Präsenzinformation der Person 40 die Person 40 identifizieren. Die identification engine 111 ist dabei zur Ausgabe einer Identifizierungsinformation eingerichtet, welche Identifizierungsinformation für eine jeweilige Person 40 eindeutig oder jedenfalls jene Person 40 eindeutig einer vorgegebenen Personengruppe zuordnen kann. So kann es zum Beispiel für manche Interaktionen auch nicht unbedingt notwendig sein, die konkrete Person 40 eindeutig zu identifizieren, sondern sie lediglich einer Personen-Gruppe zuzuweisen. Beispielsweise kann erkannt werden, dass die Person 40 grundsätzlich einer "erlaubten" Personen-Gruppe zugehört, sodass die Person 40 eben eine Interaktion durchführen kann, solange die Interaktion nicht eine tiefergehende eindeutige Identifizierung erfordert.

Die identification engine 111 kann als Software in dem Anwesenheitserfassungs-Terminal 10 bzw. in der Steuereinheit 11 realisiert sein bzw. eine Software umfassen, über welche Software detektierte Präsenzinformation der Person 40 oder aber auch weitere personenbezogene Informationen ausgewertet werden können.

Wurde von der Sensoreinheit 12 also grundsätzlich eine Person 40 erkannt, so kann diese mittels der identification engine 111 konkret identifiziert werden. Die angesprochenen weiteren personenbezogenen Informationen, die zur Identifizierung herangezogen werden können, müssen dabei keine persönlichen Daten umfassen, sondern nur eine Eindeutigkeit der Person 40 bzw. eine eindeutige Unterscheidbarkeit einer Person von anderen Personen ermöglichen.

Bei der detektierten Präsenzinformation kann es sich im Beispiel einer Kamera 121 etwa um ein Foto der Person 40 handeln. Es könnte jedoch auch lediglich das Signal, dass die Kamera 121 eine Person erfasst hat, als einfache detektierte Präsenzinformation der Steuereinheit 11 bzw. der identification engine 111 zur Verfügung gestellt werden. Das konkrete Foto der Person 40 könnte als weitere personenbezogene Information zur Verfügung gestellt werden, auf deren Grundlage sodann die konkrete Identifizierung stattfindet.

Die identification engine 111 ist darüber hinaus zur Verifizierung der Person 40 und zur Ausgabe einer Verifizierungsinformation eingerichtet. Unter Verifizierung ist hier ein Detailgrad mehr gemeint als eine simple Identifizierung. So kann über die beschriebene Identifizierung die Person 40 an sich erkannt bzw. einer Personen-Gruppe zugordnet werden. Unter Verifizierung ist jedoch weitergehende gemeint, dass auch überprüft wird, ob die identifizierte Person 40 etwa eine reale Person ist oder ob nicht eine Täuschung vorliegt, da beispielsweise der Versuch einer bewussten Falschbuchung unternommen wird. Dabei erfolgt die Verifizierung der Person 40 auf Basis der detektierten Präsenzinformation der Person 40 und/oder auf Basis der weiteren personenbezogenen Information.

Die identification engine 111 kann hierzu, wie im Ausführungsbeispiel der Figur 1 ersichtlich, eine Anti-Spoofing engine lila umfassen. Über die Anti-Spoofing engine lila, welche als Software in der identification engine 111 realisiert sein bzw. eine Software umfassen kann, kann zwischen realen Personen und lediglich vor die Kamera 121 gehaltenen Fotos einer Person unterschieden werden. Eine solche Anti-Spoofing engine lila ist besonders vorteilhaft, wenn Kameras 121 als Sensoreinheiten 12 zum Einsatz kommen, um eine bewusst falsche Buchung am Anwesenheitserfassungs-Terminal 10 zu unterbinden.

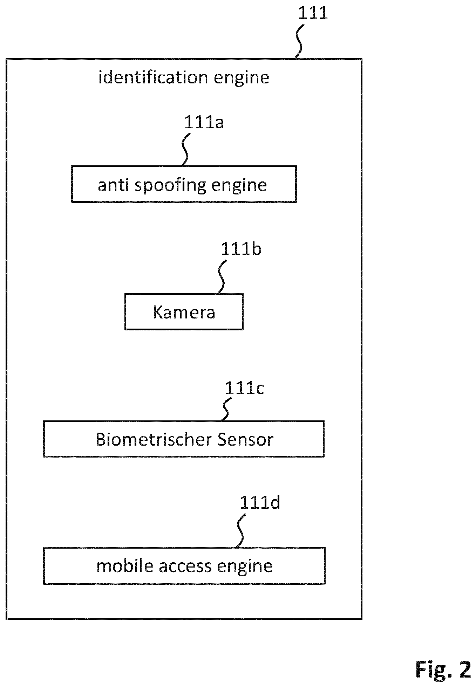

Die identification engine 111 bekommt also entweder detektierte Präsenzinformationen oder weitere personenbezogene Informationen zur Auswertung und Identifizierung der Person 40 bereitgestellt oder aber die identification engine 111 kann entsprechende Informationen auch selbst detektieren. Hierzu kann, wie in dem Ausführungsbeispiel einer identification engine 111 in Figur 2 dargestellt, die identification engine 111 ebenso wenigstens eine der folgenden Einheiten umfassen: wenigstens eine Kamera 111b, wenigstens einen biometrischen Sensor 111c, und/oder wenigstens eine mobile access engine 111d. Die Funktionalitäten der einzelnen Einheiten wurde zuvor bereits im Zusammenhang mit der Sensoreinheit 12 beschrieben, worauf verwiesen werden kann. Explizit sei erwähnt, dass die mobile access engine 111d der identification engine 111 so konfiguriert ist, dass, zur Identifizierung der Person 40, ein Kommunikationsaustausch zwischen der mobile access engine 111d und einem mobilen Zutrittsmedium (Badge, Zutrittskarte, mobiles Endgerät bzw. Anwendung auf mobilem Endgerät oder dergleichen) der Person 40 stattfindet.

Grundsätzlich kann zur Reduzierung einzelner Einheiten auch vorgesehen sein, dass die identification engine 111 direkt auf die Einheiten der Sensoreinheit 12 (Kamera 121, biometrischer Sensor 122, mobile access engine 124) zugreifen kann bzw. entsprechende Informationen von diesen zur Verfügung gestellt bekommt.

Weiterhin kann auch vorgesehen sein, dass die Sensoreinheit 12 und die Steuereinheit 11 bzw. die identification engine 111 integraler Bestandteil des Anwesenheitserfassungs-Terminals 10 und beispielsweise mitsamt den entsprechenden Sensoren gemeinsam in einem Gehäuse des Anwesenheitserfassungs-Terminals 10 verbaut sind. Es kann jedoch auch vorteilhaft sein, die Sensoreinheit 12 oder einen Teil der Sensoreinheit 12, beispielsweise die Kamera 121, außerhalb des Anwesenheitserfassungs-Terminals 10 an einem günstigen Punkt der Umgebungszone 30 anzuordnen, während etwa die identification engine 111 beispielsweise mit ihrer Kamera 111b integraler Bestandteil des Anwesenheitserfassungs-Terminals 10 ist. Sodann kann über die Sensoreinheit 12 vorteilhaft zunächst das grundsätzliche Detektieren einer Person bereits weiter entfernt vom Anwesenheitserfassungs-Terminal 10 erfolgen, während die Identifizierung der Person 40 mittels der identification engine 111 auf Grundlage der an der Kamera 111b generierten Informationen am Anwesenheitserfassungs-Terminal 10 selbst erfolgt.

Die Sensoreinheit 12 und die identification engine 111 bzw. die Steuereinheit 11 können auch derart interagierend eingerichtet sein, dass die Sensoreinheit 12 die identification engine 111 aus einem energiesparenden Sleep Mode (Energiesparmodus) weckt, wenn grundsätzlich die Person 40 durch die Sensoreinheit 12 in der Umgebungszone 30 erfasst wurde. Dadurch kann das Anwesenheitserfassungs-Terminal 10 energiesparender betrieben werden, da die identification engine 111 erst dann arbeitet, wenn eine Person 40 zur genauen Identifizierung am bestimmungsgemäßen Ort der Umgebungszone 30 eingetroffen ist.

Die Umgebungszone 30 wiederum kann, wie Figur 1 und an einem Bespiel einer Anordnung eines Anwesenheitserfassungs-Terminals 10 in einem Flur 300 ebenso Figur 3 zu entnehmen ist, in eine Mehrzahl an Unterzonen aufgeteilt sein. So ist eine Nahzone 31, die dem Anwesenheitserfassungs-Terminal 10 am nächsten angeordnet ist, sowie eine Fernzone 32, die am weitesten vom Anwesenheitserfassungs-Terminal 10 entfernt angeordnet ist, vorgesehen. Zwischen der Nahzone 31 und der Fernzone 32 befindet sich noch eine mittlere Zone 33.

Vorteilhaft gibt die Sensoreinheit 12 eine spezifische detektierte Präsenzinformation der Person 40 aus, und zwar in Abhängigkeit von einem oder mehreren zonenspezifischen Signal/Signalen, das/die von der Person 40 in der genannten Unterzonen ausgeht/ausgehen.

Dabei muss das zonenspezifische Signal nicht aktiv durch die Person 40 ausgelöst werden. Vielmehr wird das zonenspezifische Signal durch die Person 40 lediglich hervorgerufen, etwa durch die Anwesenheit bzw. durch die Art einer Fortbewegung der Person 40 in der jeweiligen Unterzone. So kann beispielsweise über ein Kamera-Tracking eine Person 40 in der Unterzone bzw. deren Bewegung verfolgt werden und daraus ein zonenspezifisches Signal generiert werden. Das zonenspezifische Signal kann also durch die einfache Anwesenheit bzw. die Bewegung der Person 40 in der Unterzone bewirkt bzw. hervorgerufen werden.

Dabei können folgende Umstände in das zonenspezifische Signal und somit die spezifische detektierte Präsenzinformation der Person 40 einfließen:
- In welcher Unterzone befindet sich die Person 40, und/oder
- in welche Unterzone begibt sich die Person 40 begibt, und/oder
- wie sieht ein Bewegungsmuster der Person 40 aus?

Das Bewegungsmuster der Person 40 kann sich darauf beziehen, wie eine Bewegungsrichtung der Person 40 und/oder eine Bewegungsgeschwindigkeit der Person 40 ist. Die Bewegungsrichtung kann dabei über einen Richtungsvektor über die Zeit repräsentiert sein. Hierüber kann das Bewegungsmuster der Person 40 innerhalb einer Umgebungszone bzw. Unterzone erfasst und etwa der Analyse der Absicht der Interaktion zugrunde gelegt werden. Mit der Information, in welche Unterzone sich eine Person 40 begibt, wird ein Zonenwechsel einer Person 40 erfassbar und kann der Analyse zugrunde gelegt werden.

Das technische Mittel zur Erkennung der Position, also der Anwesenheit, bzw. der Bewegung der Person 40 etwa in einer Unterzone kann vorteilhaft die Sensoreinheit 12 sein. Die Sensoreinheit 12 umfasst dabei vorteilhaft eine Kamera 121.

Auf diese Weise kann auch das erwähnte Wecken der identification engine 111 aus dem Sleep Mode in Abhängigkeit davon erfolgen, in welcher Unterzone sich die Person 40 befindet bzw. wie sich die Person 40 in der Unterzone fortbewegt bzw. ob sich die Person 40 in jene Unterzone begibt. Betritt die Person 40 beispielsweise lediglich die Fernzone 32 und wird dort grundsätzlich detektiert, nähert sich jene Person 40 jedoch nicht weiter dem Anwesenheitserfassungs-Terminal 10 an und betritt demnach nicht die mittlere Zone 33 oder die Nahzone 31, so kann daraus geschlossen werden, dass die Person 40 gar nicht in Interaktion mit dem Anwesenheitserfassungs-Terminal 10 treten möchte. Ist die identification engine 111 sodann derart eingerichtet, dass sie erst aktiviert wird, wenn die Person 40 die Umgebungszone 30, oder aber spezifischer erst die mittlere Zone 33 oder die Nahzone 31, betritt, dann kann das Anwesenheitserfassungs-Terminal 10 besonders sparsam betrieben werden.

Dabei kann die Aktivierung der identification engine 111 derart in Abhängigkeit von dem Bewegungsmuster der Person 40, insbesondere von der Bewegungsrichtung und/oder der Bewegungsgeschwindigkeit der Person 40, erfolgen. Ein Beispiel kann sein, dass eine schnellere Bewegung einer Person 40 detektiert wird, welche sodann zu einer Aktivierung der identification engine 111 führt.

Auf diese Weise kann auch die Interaktion mit dem Anwesenheitserfassungs-Terminal 10 bedienerfreundlicher und schneller ablaufen, da eine zweistufige Aktivierung der identification engine 111 in einer geringeren Zeit resultiert, bis das System aktiv ist.

In einer besonders vorteilhaften Ausgestaltung weist die Steuereinheit 11 bzw. identification engine 111 (bzw. eine später beschriebene intent engine 112) eine KI (Künstliche Intelligenz) mit einer Machine Learning engine auf. So kann die spezifische detektierte Präsenzinformation der Person 40 mittels Machine Learning analysiert werden und beispielsweise eine Absicht der Interaktion der Person 40 hierüber erfasst werden. Hierzu kann beispielsweise ein Abgleich eines erfassten Verhaltens der Person 40, wie etwa eines Bewegungsmusters, mit bekannten angelernten Verhalten bzw. Bewegungsmustern erfolgen.

Das in Figur 3 wiedergegebene Beispiel eines Flurs 300, der eine T-Gabelung aufweist, veranschaulicht die unterschiedlichen Unterzonen, dargestellt über gestrichelte Teilkreise, die das Anwesenheitserfassungs-Terminal 10 in unterschiedlichen Abständen umgeben. Die Person 40, die sich in der Nahzone 31 befindet, interagiert mit dem Anwesenheitserfassungs-Terminal 10. Die Person 40a wiederum befindet sich in der Fernzone 32, in welcher zwar eine grundsätzliche Detektion der Person 40a mittels der Sensoreinheit 12 des Anwesenheitserfassungs-Terminal 10 stattfindet, welche entsprechende detektierte Präsenzinformation jedoch noch nicht dazu führen würde, dass die identification engine 111 in Bezug auf die Person 40a arbeitet. Erst wenn die Person 40a auch die mittlere Zone 33 bzw. je nach gewünschter Konfiguration die Nahzone 31 betritt, wird die identification engine 111 ebenfalls aktiviert. Die dritte Person 40b wiederum befindet sich außerhalb der gesamten Umgebungszone 30, sodass in Bezug auf die Person 40b gar keine Detektion der Person stattfindet. Das Anwesenheitserfassungs-Terminal 10 detektiert die Person 40b in der dargestellten Konfiguration nicht, da klar ist, dass keine Interaktion mit dem Anwesenheitserfassungs-Terminal 10 durch die Person 40b gewünscht ist.

Auch ist eine grundsätzliche Aktivierung der engines denkbar, wenn die Person die Umgebungszone 30 im Allgemeinen, bzw. konkret die am weitesten entfernte Fernzone 32 betritt.

Weiterhin umfasst das Anwesenheitserfassungs-Terminal 10 eine intent engine 112 (Absichtserkennungseinrichtung), die, wie etwa in Figur 1 dargestellt, Bestandteil der Steuereinheit 11 sein kann. Die intent engine 112 erkennt die Absicht der Person 40, warum jene Person 40 mit dem Anwesenheitserfassungs-Terminal 10 in Interaktion tritt. Die intent engine 112 ist zur Ausgabe einer Absichtsinformation eingerichtet, welche Absichtsinformation die Intention der Person 40 über die Interaktion repräsentiert.

Die Absicht der Interaktion kann dabei beispielsweise sein, dass sich die Person 40 einbuchen möchte, da ihre Arbeitszeit beginnt, oder dass sie sich aus dem System zur Zeiterfassung ausbuchen möchte. Weiterhin kann die Absicht der Person 40 auch darin bestehen, etwa eine im Stammdatensatz hinterlegte, spezifische Information abzurufen. So könnte beispielsweise die Person 40 ihre in einem gewissen vordefinierten Zeitraum abgeleistete Anwesenheitszeit bzw. Arbeitszeit abfragen wollen. Auch kann es möglich sein, über das Anwesenheitserfassungs-Terminal 10 in Erfahrung zu bringen, inwiefern noch Guthaben auf einer Schlüsselkarte oder einer personenspezifischen Mitarbeiterkarte vorhanden ist, falls die Schlüsselkarte bzw. die personenspezifische Mitarbeiterkarte auch zur Zahlung in einer Kantine oder dergleichen geeignet ist.

Die intent engine 112 kann als Software in dem Anwesenheitserfassungs-Terminal 10 bzw. in der Steuereinheit 11 realisiert sein bzw. eine Software umfassen, über welche Software spezifische Informationen, die aus den Handlungen der Person 40 resultieren, ausgewertet werden können.

Konkret ist die intent engine 112 derart konfiguriert, dass, zur Erfassung der Absicht der Interaktion der Person 40 mit dem Anwesenheitserfassungs-Terminal 10, wenigstens eine der folgenden Informationen verwendet wird:
- eine Bewegungsrichtung der Person 40, und/oder
- eine Signaleingabe durch die Person 40.

Dabei kann die intent engine 112 ferner derart konfiguriert sein, dass die Bewegungsrichtung über ein Kamera-Tracking und/oder per Ultra-Wideband Signal erfasst wird. Dies ist besonders vorteilhaft, da keine weitere eigene Aktion durch die Person 40 erforderlich ist. So kann beispielsweise aus der Bewegungsrichtung der Person 40 von außerhalb des entsprechenden Gebäudes in Richtung Anwesenheitserfassungs-Terminal 10 geschlossen werden, dass die Person 40 gerne eine Einbuchung zum Arbeiten vornehmen möchte. Im umgekehrten Fall könnte aus der Bewegungsrichtung grundsätzlich in Richtung Gebäude- oder Etagenausgang geschlossen werden, dass die Person 40 eine Ausbuchung oder das Buchen einer Pause vornehmen möchte.

Es könnten in die Analyse der Bewegung der Person 40 und somit in die Interpretation der Absicht auch personenspezifische Informationen einfließen, die etwa in der Speicherverwaltungseinheit 20 hinterlegt sind. So kann dort hinterlegt sein, dass sich eine Person 40 gerade in einer Pause befindet oder grundsätzlich ausgeloggt ist. Sodann kann etwa aus einer grundsätzlich gewünschten Interaktion dieser Person 40 mit dem Anwesenheitserfassungs-Terminal 10 geschlossen werden, dass sich die Person einbuchen möchte.

Wird die Information zur Erfassung der Absicht der Interaktion der Person 40 über eine aktive Signaleingabe durch die Person 40 selbst übermittelt, dann kann die intent engine 112 beispielsweise derart konfiguriert sein, dass die Signaleingabe wie folgt erfolgt:
- die intent engine 112 empfängt ein von der Person 40 an einem mobilen Endgerät eingegebenes, die Absicht der Interaktion repräsentierendes Signal, und/oder
- die intent engine 112 empfängt eine die Absicht der Interaktion repräsentierende Spracheingabe von der Person 40 oder erkennt eine die Absicht der Interaktion repräsentierende Gesteneingabe von der Person 40, und/oder
- die intent engine 112 verarbeitet ein von der Person 40 an dem Anwesenheitserfassungs-Terminal 10, und zwar beispielsweise an einem Touchscreen-Display, eingegebenes und die Absicht der Interaktion repräsentierendes Signal.

Im erstgenannten Fall einer aktiven Eingabe der Person 40 an ihrem mobilen Endgerät ist vorteilhaft, dass die Absicht der Interkation durch die Person 40 eindeutig eingegeben und somit die Gefahr von Fehlinterpretation reduziert werden kann. Hierzu können in einer Anwendung auf dem mobilen Endgerät der Person 40 die für sie möglichen spezifischen Interaktionen mit dem Anwesenheitserfassungs-Terminal 10 angezeigt und dann durch die Person 40 ausgewählt werden. Durch eine entsprechende Kommunikation des mobilen Endgeräts mit dem Anwesenheitserfassungs-Terminal 10 bzw. konkret mit der intent engine 112 wird sodann die Absicht der Interaktion im Anwesenheitserfassungs-Terminal 10 erfasst und die Absichtsinformation bereitgestellt.

Im zuvor zweitgenannten Fall, dass die Signaleingabe über die Spracheingabe der Person 40 erfolgt oder aber auch, dass die Signaleingabe über eine Gesteneingabe der Person 40 erfolgt, ist eine entsprechende voice detection engine 112a (Spracherkennungseinrichtung) oder gesture detection engine 112b (Gestenerkennungseinrichtung) vorgesehen. Die voice detection engine 112a sowie die gesture detection engine 112b können als Software in der Steuereinheit 11 bzw. in der intent engine 112 realisiert sein bzw. eine Software umfassen, über welche Software das eingehende Sprachsignal der Person 40 bzw. die erfasste Geste bzw. Bewegung der Person 40 spezifische Informationen ausgewertet werden können.

Beispielsweise kann die Person 40 über eine Spracheingabe, wie etwa das Ausrufen des Wortes "Einbuchen", ihre Absicht der Interaktion mit dem Anwesenheitserfassungs-Terminal 10 kommunizieren. Wird jenes Sprachsignal von der voice detection engine 112a erkannt, gibt die intent engine 112 sodann die entsprechende Absichtsinformation aus. Im Falle einer Geste kann beispielweise vorgesehen sein, dass die Person 40 eine bestimmte Bewegung, die etwa von der Sensoreinheit 12 erfasst wird, ausführen muss, sodass die gesture detection engine 112b diese dann als Einbuchungsabsicht oder Ausbuchungsabsicht erkennt und die entsprechende Absichtsinformation ausgibt. Eine Geste kann auch sein, dass die Person 40 mit ihrem mobilen Zutrittsmedium eine vorbestimmte Bewegung ausführt, welche Bewegung sodann drahtlos am Anwesenheitserfassungs-Terminal 10 empfangen und durch die gesture detection engine 112b zu der entsprechende Absichtsinformation verarbeitet wird.

Im zuvor drittgenannten Fall ist es beispielsweise erforderlich, dass die Person 40 etwa am Touchscreen-Display des Anwesenheitserfassungs-Terminal 10 selbst ein Signal eingibt, um ihre Absicht auszudrücken. Dabei können von dem Anwesenheitserfassungs-Terminal 10 am Display auch nur mögliche, entsprechende Absichten vorgegeben sein. Die intent engine 112 verarbeitet jenes eingegebene Signal sodann zu der entsprechenden Absichtsinformation und gibt diese aus.

Sowohl die beschriebene Absichtsinformation als auch die zuvor geschilderte Identifizierungsinformation stellen wichtige Buchungsinformationen dar, die das Anwesenheitserfassungs-Terminal 10 verarbeitet. Konkret empfängt die Steuereinheit 11 jene Identifizierungsinformation von der identification engine 111 sowie die Absichtsinformation von der intent engine 112 und verarbeitet diese. Dabei findet ein Abgleich statt, ob jene empfangenen Buchungsinformationen mit in der Speicherverwaltungseinheit 20 hinterlegten, vorgegebenen Buchungsinformationen übereinstimmen. So ist über die Identifizierungsinformation die konkret mit dem Anwesenheitserfassungs-Terminal 10 interagierende Person 40 bekannt, sowie über die Absichtsinformation der gewünschte Buchungsvorgang der Person 40. Sollte jene Absicht möglich sein, wie etwa in dem Beispiel, dass sich die Person 40 zur Arbeit einbuchen möchte und in der Speicherverwaltungseinheit 20 hinterlegt ist, dass die Person 40 gerade ausgeloggt und nicht zur Arbeit eingebucht ist, dann kann der entsprechende Buchungsvorgang auf einfache Weise automatisch verarbeitet und gespeichert werden. So wird die zuvor in der Speicherverwaltungseinheit 20 gespeicherte Anwesenheitsinformation der Person 40 lediglich aufgrund der durch die identification engine 111 bereitgestellten Identifizierungsinformation und der durch die intent engine 112 bereitgestellten Absichtsinformation automatisch überschrieben und neu gespeichert.

Das vorschlagsgemäße Anwesenheitserfassungs-Terminal 10 ermöglicht auf diese Weise eine besonders einfache Bedienung und Interaktion zwischen Personen 40 und dem Anwesenheitserfassungs-Terminal 10. So können sowohl die grundsätzliche Anwesenheit der Person 40, welche eine Interaktion wünscht, als auch die konkrete Interaktion selbst, also die Absicht der Interaktion der Person 40, automatisch erfasst werden, bzw. über simple Gesten oder Bewegungen durch die Person 40 ausgedrückt werden. Die Buchungsvorgänge an dem Anwesenheitserfassungs-Terminal 10 sind stark vereinfacht.

Dabei kann grundsätzlich besonders vorteilhaft auch allein aus der Detektion der Person 40 in der Umgebungszone 30 durch die Sensoreinheit 12 und der entsprechenden detektierten Präsenzinformation sowohl die Identifizierungsinformation (mittels der identification engine 111) als auch die Absichtsinformation (mittels der intent engine 112) extrahiert werden. Dabei ist die Reihenfolge der Verarbeitung nicht zwingend derart, dass zunächst die Identifizierungsinformation und danach erst die Absichtsinformation erstellt und ausgegeben werden müsste.

Die Identifizierungsinformation kann vorteilhaft auch nachgelagert verarbeitet werden, sodass das konkrete Identifizieren der Person 40, also eine eindeutige Zuweisung etwa, um welche/-n Mitarbeiter/-in es sich handelt, gegebenenfalls nur dann erfolgt, wenn eine bestimmte Absicht aus vorgegebenen Absichten, die eine Identifikation erfordern, erfasst wird. Es können also auch Absichten der Personen 40 möglich sein, die keine konkrete Identifikation der Person 40 erfordern. Dies kann nach der Analyse der durch die intent engine 112 bereitgestellten Absichtsinformation klar sein.

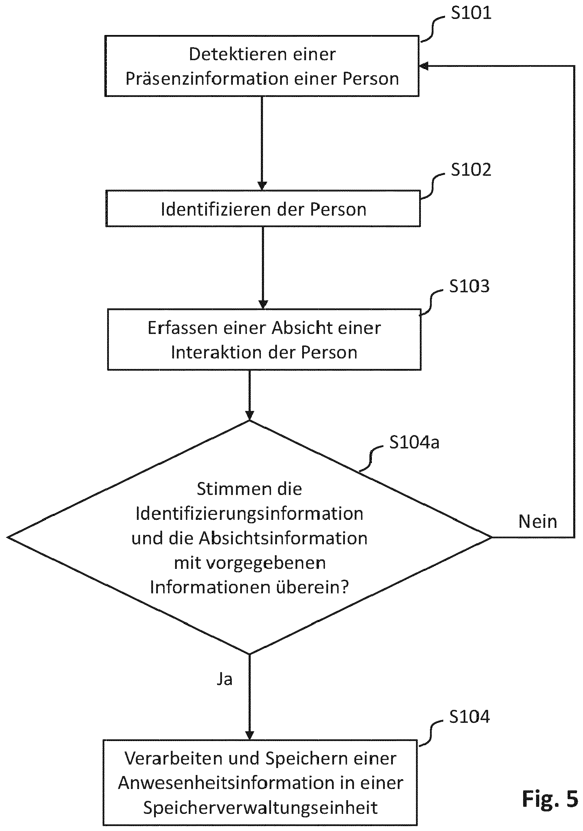

Zur Umsetzung der besonders bedienerfreundlichen intuitiven Interaktion mit dem Anwesenheitserfassungs-Terminal 10 wird das nachfolgende und in Figur 5 schematisch dargestellte computerimplementierte Verfahren zum Betreiben des Anwesenheitserfassungs-Terminals 10 vorgeschlagen: Im Schritt S101 erfolgt das Detektieren der Präsenzinformation der Person 40, wobei die detektierte Präsenzinformation mittels Beobachtens der Umgebungszone 30 mit der wenigstens einen Sensoreinheit 12 generiert wird. Im Schritt S102 wird die Person 40 mittels der identification engine 111 identifiziert. Dabei kann der Detailgrad der Identifizierung auch variieren und entweder die Person 40 konkret eindeutig identifiziert werden oder aber auch nur einer Personen-Gruppe zugeordnet werden. Dies kann auch, wie zuvor beschrieben, von der erfassten Absicht der Interaktion der Person 40 mit dem Anwesenheitserfassungs-Terminal 10 abhängig gemacht sein. Im Schritt S102 wird dabei eine Identifizierungsinformation auf Basis der detektierten Präsenzinformation der Person 40 und/oder auf Basis zumindest einer weiteren personenbezogenen Information generiert.

Im Schritt S103 wird die Absicht der Interaktion der Person 40 mit dem Anwesenheitserfassungs-Terminal 10 mittels der intent engine 112 erfasst und die entsprechende Absichtsinformation generiert. Dieser Schritt S103 kann auch vor dem Schritt S102 stattfinden oder gleichzeitig mit diesem. Es können wie zuvor beschrieben die erfassten Beobachtungsdaten der Sensoreinheit 12 zugrunde gelegt werden, um sowohl die Identifizierungsinformation als auch die Absichtsinformation zu erstellen. Der Schritt S102 des Identifizierens kann im Detailgrad auch davon abhängig gemacht werden, welche Interaktion beabsichtigt ist, also welche Absichtsinformation generiert wurde.

Die generierten Identifizierungsinformation und Absichtsinformation werden sodann mit vorgegebenen Informationen (Buchungsinformationen) abgeglichen (Schritt S104a). Hierzu interagiert die Steuereinheit 11 des Anwesenheitserfassungs-Terminals 10 wie zuvor beschrieben mit der Speicherverwaltungseinheit 20. Im Schritt S104 wird dann die Anwesenheitsinformation der Person 40 in der Speicherverwaltungseinheit 20 verarbeitet und automatisch gespeichert, wenn jener Abgleich (Schritt S104a) ergeben hat, dass die Identifizierungsinformation und die Absichtsinformation vorgegebenen Informationen entsprechen. Die Anwesenheitsinformation kann beispielsweise sein, dass die Person 40 nun zur Arbeit erschienen ist und die Zeiterfassung der Arbeit beginnt. Insofern kann das Anwesenheitserfassungs-Terminal 10 ein Zeiterfassungs-Terminal darstellen.

Die im Rahmen des vorschlagsgemäßen und dargestellten Anwesenheitserfassungs-Terminal 10 beschriebenen Merkmale und Vorteile sind entsprechend auf das vorschlagsgemäße computerimplementierte Verfahren zum Betreiben eines Anwesenheitserfassungs-Terminals übertragbar. Konkret ist das computerimplementierte Verfahren zum Betreiben jenes vorschlagsgemäßen und beschriebenen Anwesenheitserfassungs-Terminals 10 eingerichtet. Das vorschlagsgemäße und hier beschriebene Anwesenheitserfassungs-Terminal 10 wiederum ist zur Ausführung des vorschlagsgemäßen computerimplementierten Verfahrens zum Betreiben eines Anwesenheitserfassungs-Terminals eingerichtet. Insofern wurden zuvor und werden nachfolgend die das Anwesenheitserfassungs-Terminal 10 bzw. das Verfahren zum Betreiben des Anwesenheitserfassungs-Terminals 10 charakterisierende Merkmale und spezifische Vorteile regelmäßig nur einfach beschrieben.

Vorschlagsgemäß kann in das Anwesenheitserfassungs-Terminal 10 auch eine weitere Kontrollebene integriert sein. Sodann wird der Person 40 ein Feedback über die erfolgte Buchung, also über die vorgenommene Abänderung der Anwesenheitsinformation in der Speicherverwaltungseinheit 20 oder eben auch darüber, dass keine Änderung vorgenommen wurde, eine Rückmeldung gegeben.

Vorteilhaft ist die Speicherverwaltungseinheit 20 dann derart eingerichtet, dass, wenn die Anwesenheitsinformation gespeichert worden ist, die Speicherverwaltungseinheit 20 in den Daten der Person 40 in ihrem Stammsatz der personenspezifischen Daten überprüft, ob ein Feedback zu der Interaktion der Person 40 mit dem Anwesenheitserfassungs-Terminal 10 gewünscht ist.

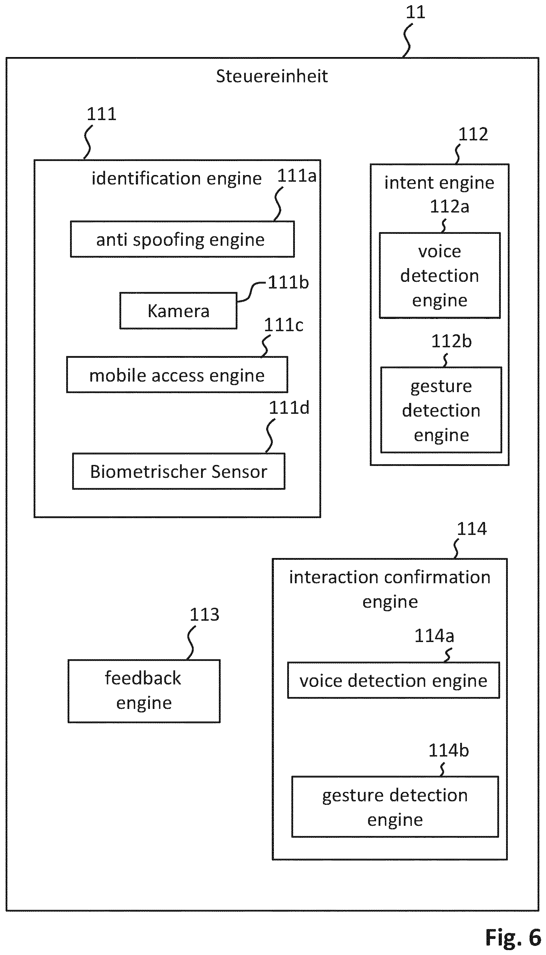

Das Anwesenheitserfassungs-Terminal 10 bzw. die Steuereinheit 11 kann dazu, wie etwa in Figur 6 dargestellt, zusätzlich zur identification engine 111 sowie intent engine 112 auch eine Feedback engine 113 (Rückmeldungseinrichtung) aufweisen. Die Feedback engine 113 ist derart eingerichtet, dass, wenn die Interaktion der Person 40 mit dem Anwesenheitserfassungs-Terminal 10 erfolgt ist, eine Feedback-Information ausgegeben werden kann. Die Feedback-Information kann dabei am Anwesenheitserfassungs-Terminal 10, beispielsweise am Display dieses bzw. über Lautsprecher, oder aber auch an dem mobilen Zutrittsmedium der Person 40 ausgegeben werden. Dabei kann die Feedback-Information als Sprachsignal und/oder als grafisches Signal und/oder als haptisches Signal, wie beispielsweise einem Vibrationssignal am mobilen Zutrittsmedium, ausgegeben werden.

Die Feedback-Information kann beispielsweise auch eine Aufforderung oder eine Benutzerinformationen umfassen, mit der ein Unterhalter des Anwesenheitserfassungs-Terminals (z.B. Arbeitgeber) die Person 40, die als Benutzer mit dem Anwesenheitserfassungs-Terminal 10 interagiert, zu etwas auffordert oder diese über etwas informiert. Eine Aufforderung an die Person 40 könnte etwa lauten: "bei Personalabteilung melden", "bitte Überstunden reduzieren" etc.. Eine simple Information könnte etwa über den aktuellen Zeitkontostand erfolgen.

Es kann vorteilhaft vorgesehen sein, dass sensible personenspezifische Informationen nur auf dem mobilen Endgerät der Person 40 ausgeben werden, während allgemeine und nicht sensible Informationen nur auf dem Anwesenheitserfassungs-Terminal 10 oder auf dem Anwesenheitserfassungs-Terminal 10 sowie dem mobilen Endgerät ausgeben werden.

Die Feedback engine 113 kann zumindest teilweise als Software in dem Anwesenheitserfassungs-Terminal 10 bzw. in der Steuereinheit 11 realisiert sein, über welche Software zum einen mithilfe der Speicherverwaltungseinheit 20 überprüft werden kann, ob die Person 40 ein Feedback wünscht und, zum anderen, das entsprechende Feedback veranlasst werden kann. Dementsprechend kann die Feedback engine 113 bzw. die Steuereinheit 11 in Kommunikationsverbindung mit einer Sprachausgabeeinheit stehen, falls etwa ein Sprachsignal als Feedback-Information gewünscht ist.

Besonders vorteilhaft wird im Stammsatz der personenspezifischen Daten zuvor kontrolliert, ob die konkrete Person 40, die die Interaktion durchführt und zuvor identifiziert wurde, überhaupt ein Feedback wünscht, bzw. falls ja, in welcher Form das Feedback gewünscht ist. Die Feedback engine 113 kann demnach derart eingerichtet sein, dass eine personenabhängige Feedback-Information ausgegeben werden kann. So kann etwa ein Sprachsignal in der jeweiligen Sprache der Person 40 ausgegeben werden. Ferner könnte beispielsweise bei einer Person 40 mit einer Hörbehinderung vorgesehen sein, dass diese Person 40 ein anderes Signal als Feedback-Information, etwa das angesprochene grafische oder haptische Signal erhält.

Um die Sicherheit einer korrekten Interaktion zwischen der Person 40 und dem Anwesenheitserfassungs-Terminal 10 zu erhöhen, ist in dem Ausführungsbeispiel der Figur 6 ferner eine interaction confirmation engine 114 (Interaktionsbestätigungseinrichtung) in dem Anwesenheitserfassungs-Terminal 10 bzw. der Steuereinheit 11 vorgesehen.

Die interaction confirmation engine 114 kann eine klarstellende Absichtsinformation empfangen. Die klarstellende Absichtsinformation ist dafür gedacht, die eigentlich bereits erfasste Absicht der Interaktion der Person 40 mit dem Anwesenheitserfassungs-Terminal 10 zu verifizieren oder falsifizieren. Dann ist vorteilhaft, wenn jene klarstellende Absichtsinformation eine weitere Buchungsinformation für die Steuereinheit 11 darstellt. Von dieser weiteren Buchungsinformation wird zusätzlich zu der Identifizierungsinformation sowie Absichtsinformation dann abhängig gemacht, ob die automatische Buchung in der Speicherverwaltungseinheit 20 durchgeführt werden soll oder nicht.

Hierzu kann die interaction confirmation engine 114 zumindest teilweise als Software in dem Anwesenheitserfassungs-Terminal 10 bzw. in der Steuereinheit 11 realisiert sein, über welche Software entsprechende Signale bzw. Handlungen der Person 40 zur Bestätigung bzw. Verneinung der zuvor erfassten Absicht ausgewertet werden können.

Die interaction confirmation engine 114 kann als voice detection engine 114a (Spracherkennungseinrichtung) zur Erfassung einer Spracheingabe durch die Person 40 und/oder als gesture detection engine 114b (Gestenerkennungseinrichtung) zur Erfassung einer Gesteneingabe durch die Person 40 ausgebildet sein. Hierzu kann auf die Beschreibung der voice detection engine 112a bzw. gesture detection engine 112b zuvor verwiesen werden.

Konkret kann eine klarstellende Absichtsinformation etwa drin bestehen, dass die Person 40 über ein Sprachsignal (etwa ein ausgesprochenes "ja") bestätigt, dass sie die erfasste Interaktion wünscht und diese ausgeführt werden soll. Auch kontaktgebundene klarstellende Absichtsinformationen sind denkbar, indem die Person 40 etwa eine Eingabe am Anwesenheitserfassungs-Terminal 10 oder auf ihrem mobilen Zutrittsmedium vornimmt. Weiterhin sind jedoch auch sprachsowie kontaktlose Bestätigungen durch die Person 40 denkbar, indem die Person 40 etwa eine bestimmte Geste, beispielsweise auch mit ihrem mobilen Zutrittsmedium, ausführt. Eine spezifische Bewegung des mobilen Zutrittsmediums kann etwa über RFID- oder UWB-Technik als klarstellende Absichtsinformation von der interaction confirmation engine 114 erkannt werden.

## Patentansprüche

1. Anwesenheitserfassungs-Terminal (10), insbesondere Zeiterfassungs-Terminal, zur Erfassung einer Anwesenheitsinformation einer Person (40) auf Basis einer Aktion der Person (40), umfassend:
- eine Steuereinheit (11),
- eine Speicherverwaltungseinheit (20), wobei die Speicherverwaltungseinheit (20) zum Verarbeiten und Speichern der Anwesenheitsinformation der Person (40) eingerichtet ist,
- wenigstens eine Sensoreinheit (12), wobei die Sensoreinheit zur Beobachtung einer Umgebungszone (30) und zur Ausgabe einer aus der Beobachtung der Umgebungszone (30) detektierten Präsenzinformation der Person (40) eingerichtet ist,
- eine identification engine (111), wobei die identification engine (111) zur Identifizierung der Person (40) und zur Ausgabe einer Identifizierungsinformation eingerichtet ist, wobei die Identifizierung der Person (40) auf Basis der detektierten Präsenzinformation der Person (40) und/oder auf Basis zumindest einer weiteren personenbezogenen Information erfolgen kann, und
- eine intent engine (112), wobei die intent engine (112) zur Erfassung einer Absicht einer Interaktion der Person (40) mit dem Anwesenheitserfassungs-Terminal (10) und zur Ausgabe einer Absichtsinformation eingerichtet ist,
wobei die Steuereinheit (11) dazu eingerichtet ist, zumindest folgende Buchungsinformationen zu empfangen und zu verarbeiten:
- die Identifizierungsinformation von der identification engine (111), und
- die Absichtsinformation von der intent engine (112),
wobei die Steuereinheit (11) derart mit der Speicherverwaltungseinheit (20) interagierend konfiguriert ist, dass, falls empfangene Buchungsinformationen mit vorgegebenen Buchungsinformationen übereinstimmen, die Anwesenheitsinformation der Person (40) automatisch verarbeitet und gespeichert wird.

2. Anwesenheitserfassungs-Terminal nach Anspruch 1, wobei die Steuereinheit (11) ferner zum Empfangen und zum Verarbeiten der detektierten Präsenzinformation der Person (40) von der Sensoreinheit (12) eingerichtet ist.

3. Anwesenheitserfassungs-Terminal nach Anspruch 1 oder 2, wobei die Umgebungszone (30) in eine Mehrzahl an Unterzonen aufgeteilt ist, wobei, vorzugsweise, die Mehrzahl an Unterzonen zumindest folgende Unterzonen umfasst:
- eine Nahzone (31), sowie
- eine Fernzone (32),
wobei die Nahzone (31) näher an dem Anwesenheitserfassungs-Terminal (10) angeordnet ist als die Fernzone (32),
wobei, insbesondere, die Sensoreinheit (12) eine spezifische detektierte Präsenzinformation der Person (40) in Abhängigkeit von einem zonenspezifischen Signal ausgibt, wobei das zonenspezifische Signal durch die Person (40) in der Unterzone ausgelöst wird,
wobei, vorzugsweise, die spezifische detektierte Präsenzinformation der Person (40) eine Information über folgende Umstände umfasst:
- in welcher Unterzone sich die Person (40) befindet, und/oder
- in welche Unterzone sich die Person (40) begibt, und/oder
- wie ein Bewegungsmuster der Person (40) aussieht, insbesondere wie eine Bewegungsrichtung der Person (40) und/oder eine Bewegungsgeschwindigkeit der Person (40) ist.

4. Anwesenheitserfassungs-Terminal nach einem der Ansprüche 1 bis 3,
wobei die identification engine derart (111) eingerichtet ist, dass sie erst aktiviert wird, wenn die Person (40) die Umgebungszone (30), insbesondere die Nahzone (31), betritt,
wobei, vorzugsweise, die Aktivierung der identification engine derart (111) in Abhängigkeit von einem der Person (40), insbesondere von einer Bewegungsrichtung der Person (40) und/oder einer Bewegungsgeschwindigkeit der Person (40), erfolgt.

5. Anwesenheitserfassungs-Terminal nach Anspruch 3 oder 4, wobei die Mehrzahl an Unterzonen ferner eine mittlere Zone (33) umfasst, wobei die mittlere Zone (33) näher an dem Anwesenheitserfassungs-Terminal (10) angeordnet ist als die Fernzone (32).

6. Anwesenheitserfassungs-Terminal nach einem der Ansprüche 1 bis 5, wobei die identification engine (111) ferner zur Verifizierung der Person (40) und zur Ausgabe einer Verifizierungsinformation eingerichtet ist, wobei die Verifizierung der Person (40) auf Basis der detektierten Präsenzinformation der Person und/oder auf Basis der weiteren personenbezogenen Information erfolgt.

7. Anwesenheitserfassungs-Terminal nach Anspruch 6, wobei die identification engine (111) wenigstens eine Anti-Spoofing engine (lila) zur Differenzierung zwischen einer realen Person und einem Foto einer Person umfasst.

8. Anwesenheitserfassungs-Terminal nach einem der Ansprüche 1 bis 7, wobei die Sensoreinheit (12) wenigstens eine der folgenden Einheiten umfasst:
- wenigstens eine Kamera (121),
- wenigstens einen biometrischen Sensor (122),
- wenigstens einen Annäherungssensor (123) und/oder
- wenigstens eine mobile access engine (124), wobei die mobile access engine (124) der Sensoreinheit (12) so konfiguriert ist, dass, zum Detektieren der Präsenzinformation der Person (40), ein Kommunikationsaustausch zwischen der mobile access engine (124) und einem mobilen Zutrittsmedium der Person (40) stattfindet.

9. Anwesenheitserfassungs-Terminal nach einem der Ansprüche 1 bis 8, wobei die identification engine (111) wenigstens eine der folgenden Einheiten umfasst:
- wenigstens eine Kamera (111b),
- wenigstens einen biometrischen Sensor (111c), und/oder
- wenigstens eine mobile access engine (llld), wobei die mobile access engine (llld) der identification engine (111) so konfiguriert ist, dass, zur Identifizierung der Person (40), ein Kommunikationsaustausch zwischen der mobile access engine (llld) und einem/dem mobilen Zutrittsmedium der Person stattfindet.

10. Anwesenheitserfassungs-Terminal nach Anspruch 8 oder 9, wobei das mobile Zutrittsmedium der Person (40) als Zutrittskarte, Badge und/oder mobiles Endgerät ausgebildet ist.

11. Anwesenheitserfassungs-Terminal nach einem der Ansprüche 1 bis 10, wobei die intent engine (112) derart konfiguriert ist, dass, zur Erfassung der Absicht der Interaktion der Person (40) mit dem Anwesenheitserfassungs-Terminal (10), wenigstens eine der folgenden Informationen verwendet wird:
- eine/die Bewegungsrichtung der Person (40), wobei, insbesondere, die intent engine (112) ferner derart konfiguriert ist, dass die Bewegungsrichtung über ein Kamera-Tracking und/oder per Ultra-Wideband Signal erfasst wird, und/oder
- eine Signaleingabe durch die Person (40), wobei, insbesondere, die intent engine (112) ferner derart konfiguriert ist, dass die Signaleingabe wie folgt erfolgt:
- die intent engine (112) empfängt ein von der Person (40) an einem/dem mobilen Endgerät eingegebenes, die Absicht der Interaktion repräsentierendes Signal, und/oder
- die intent engine (112) empfängt eine die Absicht der Interaktion repräsentierende Spracheingabe von der Person (40) oder erkennt eine die Absicht der Interaktion repräsentierende Gesteneingabe von der Person (40), und/oder
- die intent engine (112) verarbeitet ein von der Person (40) an dem Anwesenheitserfassungs-Terminal (10), bevorzugt an einem Touchscreen-Display, eingegebenes und die Absicht der Interaktion repräsentierendes Signal, und/oder
- die intent engine (112) empfängt ein von der Person (40) mittels einer Aktion mit einer/der Zutrittskarte, einem/dem Badge, und/oder einem/dem mobilen Endgerät getriggertes, die Absicht der Interaktion repräsentierendes Signal.

12. Anwesenheitserfassungs-Terminal nach einem der Ansprüche 1 bis 11, wobei ferner eine interaction confirmation engine (114) vorgesehen ist, wobei die interaction confirmation engine (114) zum Empfangen einer klarstellenden Absichtsinformation eingerichtet ist, wobei die klarstellende Absichtsinformation die Absicht der Interaktion der Person (40) mit dem Anwesenheitserfassungs-Terminal (10) verifiziert oder falsifiziert, wobei, insbesondere, die klarstellende Absichtsinformation eine weitere Buchungsinformation für die Steuereinheit (11) darstellt.

13. Anwesenheitserfassungs-Terminal nach Anspruch 12, wobei die interaction confirmation engine (114) als voice detection engine zur Erfassung einer Spracheingabe durch die Person (40) und/oder als gesture detection engine zur Erfassung einer Gesteneingabe durch die Person (40) ausgebildet ist.

14. Anwesenheitserfassungs-Terminal nach einem der Ansprüche 1 bis 13, wobei ferner eine Feedback engine (113) vorgesehen ist, wobei die Feedback engine (113) derart eingerichtet ist, dass, wenn die Interaktion der Person (40) mit dem Anwesenheitserfassungs-Terminal (10) erfolgt ist, eine Feedback-Information ausgegeben werden kann,
wobei, insbesondere, die Feedback-Information wie folgt ausgebildet ist:
- ein Sprachsignal, und/oder
- ein grafisches Signal, und/oder
- ein haptisches Signal, insbesondere ein Vibrationssignal,
wobei die Feedback-Information am Anwesenheitserfassungs-Terminal (10) und/oder an einem/dem mobilen Zutrittsmedium der Person (40) ausgegeben wird.

15. Anwesenheitserfassungs-Terminal nach Anspruch 14, wobei die Speicherverwaltungseinheit (20) einen Stammsatz personenspezifischer Daten umfasst, wobei die Speicherverwaltungseinheit (20) derart eingerichtet ist, dass, wenn die Anwesenheitsinformation gespeichert worden ist, die Speicherverwaltungseinheit (20) in den Daten der Person (40) überprüft, ob ein Feedback zu der Interaktion der Person (40) mit dem Anwesenheitserfassungs-Terminal (10) gewünscht ist.

16. Computerimplementiertes Verfahren zum Betreiben eines Anwesenheitserfassungs-Terminals (10), insbesondere Zeiterfassungs-Terminal, zur Erfassung einer Anwesenheitsinformation einer Person (40) auf Basis einer Aktion der Person (40), umfassend die Schritte:
- Detektieren einer Präsenzinformation der Person (40), wobei eine detektierte Präsenzinformation mittels Beobachtens einer Umgebungszone (30) mit wenigstens einer Sensoreinheit (12) generiert wird,
- Identifizieren der Person (40) durch eine identification engine (111), wobei eine Identifizierungsinformation auf Basis der detektierten Präsenzinformation der Person (40) und/oder auf Basis zumindest einer weiteren personenbezogenen Information generiert wird,
- Erfassen einer Absicht einer Interaktion der Person (40) mit dem Anwesenheitserfassungs-Terminal (10) durch eine intent engine (112), wobei eine Absichtsinformation generiert wird,
- Verarbeiten und Speichern einer Anwesenheitsinformation der Person (40) in einer Speicherverwaltungseinheit (20), falls zumindest bestimmt wird, dass die Identifizierungsinformation und die Absichtsinformation vorgegebenen Informationen entsprechen.

17. Computerprogramm, umfassend Befehle, die bei der Ausführung des Programms durch einen Prozessor eines Anwesenheitserfassungs-Terminals (10) das Anwesenheitserfassungs-Terminal (10) veranlassen, die Schritte des Verfahrens nach Anspruch 16 auszuführen.
